# EUROPÄISCHE PATENTSCHRIFT

(11) **EP 4 363 959 B1**
(45) Veröffentlichungstag und Bekanntmachung des Hinweises auf die Patenterteilung: **25.02.2026**
(21) Anmeldenummer: 22776866.0
(22) Anmeldetag: 09.09.2022
(51) Int. Cl.: G06F 3/12, G06K 15/02

(54) **VERFAHREN UND PRODUKT ZUR SYNTHESE VON DRUCKDATEN UND ZUR BEREITSTELLUNG DERSELBEN AN EINEN DRUCKER**
METHOD AND PRODUCT FOR SYNTHESISING PRINT DATA AND FOR PROVIDING THE DATA TO A PRINTER
PROCÉDÉ ET PRODUIT DE SYNTHÈSE DE DONNÉES D'IMPRESSION ET DE FOURNITURE DES DONNÉES À UNE IMPRIMANTE

(30) Priorität: 18.10.2021 IT 202100026552
(43) Veröffentlichungstag der Anmeldung: 08.05.2024
(73) Patentinhaber: Durst Group AG, 39042 Brixen (IT)
(72) Erfinder: STOLL, Thomas, 39042 Brixen (IT)
(74) Vertreter: Kempkens, Anke
(86) Internationale Anmeldenummer: PCT/EP2022/025420
(87) Internationale Veröffentlichungsnummer: WO 2023/066512

(56) Entgegenhaltungen:
- DE-T2- 69 130 132
- US-A- 6 091 506
- US-A1- 2009 046 105
- TAHIR REHAN ET AL: "ACAP at the Edge with the Versal AI Edge Series", 6 September 2021 (2021-09-06), pages 1 - 17, XP055927324, Retrieved from the Internet <URL:https://www.xilinx.com/content/dam/xilinx//support/documentation/white_papers/wp518-ai-edge-intro.pdf> [retrieved on 20220602]

## Beschreibung

Die vorliegende Erfindung betrifft ein Verfahren und ein Produkt jeweils zur Synthese von Druckdaten aus objektbasierten Daten in Form einer Seitenbeschreibungssprache und zur Bereitstellung derselben an einen Drucker.

An dieser Stelle sollen vorab einige in dieser Beschreibung verwendete Begriffe definiert werden.

Wenn im Rahmen dieser Beschreibung von objektbasierten Daten in Form einer Seitenbeschreibungssprache gesprochen wird, dann werden darunter Objekte und deren Eigenschaften verstanden, aus denen ein Bild aufgebaut ist. Unter dem Begriff Objekt wird ein grafisches Primitiv, ein Pixelfeld, eine Schattierung, eine Transparenz oder eine Schrift verstanden. Als grafisches Primitiv werden in dieser Anmeldung elementare ein- oder zweidimensionale geometrische Formen bezeichnet. Ein grafisches Primitiv wird unter anderem durch einen oder mehreren Vektoren beschrieben. Eine zweidimensionale geometrische Form ist beispielswese ein Kreis, eine Ellipse oder ein Polygon, wie beispielsweise ein Rechteck, ein Quadrat oder ein Dreieck. Hingegen ist eine eindimensionale geometrische Form beispielsweise ein Punkt, d.h. ein Pixel, eine Linie oder ein Polynomzug. Wenn im Rahmen dieser Beschreibung von Eigenschaften der Objekte gesprochen wird, so wird darunter die Lage des Objekts im Bild, und gegebenenfalls dessen Farbe, Strichstärke, Füllmuster und weitere, das Aussehen bestimmende Daten verstanden.

Der Begriff programmierbares System-on-Chip, im Folgenden auch PSoC genannt, bedeutet in dieser Beschreibung, dass es möglich ist das System-on-Chip, insbesondere dessen Funktionsmodule, sowohl auf Hardwareebene als auch auf Softwareebene zu programmieren und umzuprogrammieren, d.h. zu designen und umzudesignen.

Aus der US 6 091 506 A ist ein Verfahren bekannt zur Synthese von Druckdaten für einen Drucker mithilfe einer Verarbeitungseinheit umfassend einen Masterprozessor und mehrere Parallelprozessoren, wobei der Masterprozessor ausgebildet ist eine Anzeigeliste zu erstellen und diese in Unterlisten zu unterteilen, die er an die Parallelprozessoren verteilt, wobei die Parallelprozessoren ausgebildet sind die Unterlisten zu interpretieren, derart, dass dadurch ein Bild als Bitmap-Daten gerendert wird.

In der US2009046105A1 sind Methoden und Systeme offenbart zur schnellen und effizienten Verarbeitung von Daten in einer Grafikprozessoreinheit-Pipeline.

Weiter sind in der DE69130132T2 Methoden und Geräte zum Texture-Mapping grafischer Grundelemente in einem Grafik-Pipeline-Architektursystem offenbart.

Verfahren zum Konvertieren von objektbasierten Daten von Vektorgrafiken in Pixeldaten von Rastergrafiken stellen typischerweise einen ersten Schritt hin zur Synthese von Druckdaten dar, auf deren Basis ein Drucker ein Druckmedium bedrucken kann. Die meisten dieser Verfahren bedienen sich heutzutage eines Rastergrafikprozessors, der so ausgelegt wurde, dass in der Regel eine vollständige Konvertierung einer Vektorgrafik in eine Rastergrafik erforderlich ist, bevor die erhaltene Pixelgrafik mit einem vorgegebenen Algorithmus gedithert und infolgedessen als geditherte Druckgrafik einem Drucker übergeben werden kann. Dies ist jedenfalls der Fall, wenn es sich um komplexe Vektorgrafiken handelt.

Solche Rastergrafikprozessoren sind kostengünstig in der Anschaffung, können allerdings eingehende Daten nur uneffektiv und daher mühsam bearbeiten, sodass sie sich lediglich dann eignen, wenn ein einziges Bild mit einem Drucker in einer solch grossen Auflage gedruckt werden kann und soll, dass genügend Zeit für die Rasterung einer weiteren Vektorgrafik zur Verfügung steht.

Ein die langsame Konvertierungsgeschwindigkeit, d.h. Rasterungsgeschwindigkeit, verursachendes Problem ist die Tatsache, dass solche Verfahren sich eines Rastergrafikprozessors mit einem Prozessor bedienen, der die aufwendige Rasterung lediglich seriell vornehmen kann.

Um eine ausreichend hohe Flexibilität hinsichtlich von kurzfristigen Änderungen bei der Vorbereitung von Druckaufträgen zu ermöglichen, ist es von grosser Wichtigkeit, dass die Konvertierung von objektbasierten Daten einer Vektorgrafik in eine Pixelgrafik möglichst zeitsparend durchgeführt werden kann.

Der Grund dafür, weshalb heutzutage bei Single-Pass-Druckern mit einer relativ hohen Druckauflösung die meisten zu druckenden Bilder weit im Voraus gerastert werden müssen, ist, dass der Drucker diese Druckbilddaten schneller konsumiert als ein typischer Rastergrafikprozessor die diesen Druckbilddaten zugrundeliegenden Vektorgrafiken verarbeiten kann, wodurch keine Flexibilität hinsichtlich kurzfristiger Änderungen bei der Vorbereitung der Druckaufträge gegeben ist. Dies trifft insbesondere dann zu, wenn Druckaufträge mit einem hohen Anteil an variierenden Bildern umgewandelt werden müssen, bei denen kein Bild mit einem anderen Bild identisch ist.

Typische Hochleistungsdruckmaschinen, d.h. Single-Pass-Tintenstrahldrucker, konsumieren heutzutage Druckdaten in Raten von mindestens 100 Gbit/s, oft jedoch auch von mehr als 300 Gbit/s oder mehr als 400 Gbit/s, wobei die Tendenz steigend ist. Bei Single-Pass-Tintenstrahldruckern, die ein Druckmedium mit einer Breite von zwei Metern mit einer Geschwindigkeit von fünf Meter pro Sekunde bei einer Auflösung von 1200 x 1200 DPI ohne Produktionsstopp bedrucken können sollen, sind bei der Konvertierung von Vektorgrafiken in Rastergrafiken Datenausgaberaten von etwa 1600Gbit/sec nötig, wenn Druckaufträge einen hohen Anteil an variierenden Bildern umfassen und die Konvertierung im Wesentlich zeitgleich mit dem Druckvorgang von statten gehen soll.

Eine zusätzliche Herausforderung bei den meisten der gängigen Rastergrafikprozessoren stellt die Erbringung von genügend Speicherplatz dar.

Für einen mit 2,6 m Breite und mit 2400 DPI Auflösung druckenden Single-Pass-Drucker sind etwa 16 GByte pro m² an Speicherkapazität erforderlich. Sollen beispielsweise Druckdaten für einen 24 Stundenbetrieb des Druckers im Voraus bereitgestellt werden, ist dafür zu sorgen, dass eine Speicherkapazität für eine Datenmenge in Höhe von etwa 8 PetaByte Druckdaten pro Tag zur Verfügung gestellt wird. Hierfür sind heutzutage mehrere Speicherschränke nötig. In Bezug auf die Rasterung einer derartigen Menge an Daten sind mit den meisten aktuell auf dem Markt verfügbaren seriell arbeitenden Rastergrafikprozessoren mehrere Tage einzuplanen.

Unter einem Single-Pass Drucker wird im Rahmen dieser Beschreibung eine Druckmaschine mit einem Druckmodul zum Bedrucken zumindest eines Druckmediums verstanden, bei dem das Druckmedium oder die jeweiligen Druckmedien im Betriebsmodus der Druckmaschine kontinuierlich bewegt wird oder werden und das Druckmodul einen Bereich des Druckmediums oder der jeweiligen Druckmedien jeweils ein einziges Mal erblickt und stationär angeordnet ist.

Bei einem in der jüngsten Vergangenheit äusserst selten eingesetzten Verfahren zur Synthese von Druckdaten und zur Bereitstellung derselben an einen Single-Pass-Drucker wird eine schnelle Konvertierung der objektbasierten Daten in 8-Bit Pixeldaten mit einem neuartigen Hochleistungs-Rastergrafikprozessor, der die Ausgabe von gerasterten Pixeldaten bei einer Ausgaberate von mehr als 800Gbit/sec schafft, erzielt, indem die objektbasierten Daten an eine Vielzahl an Prozessoren bereitgestellt und mit diesen parallel, d.h. zeitgleich, bearbeitet werden, indem je ein Bild aus einer Gruppe von mehreren Bildern an je einen Prozessor des Rastergrafikprozessors zur Konvertierung delegiert wird, sodass mehrere Prozessoren unterschiedliche Bilder parallel aber in serieller Weise bearbeiten.

Dieses vorbekannte Verfahren umfasst die folgenden Schritte: (A) Eingeben von objektbasierten Daten mehrerer Bilder in Form einer Seitenbeschreibungssprache in einen Rastergrafikprozessor mit zumindest einem System-on-Chip umfassend mehrere Prozessoren; (B) Konvertieren der objektbasierten Daten in 8-Bit Pixeldaten eines jeden Farbkanals eines ersten Zielfarbraums mit vorgegebener Bildauflösung, indem die objektbasierten Daten an die Prozessoren bereitgestellt und mit den Prozessoren parallel bearbeitet werden; (C) Umwandeln der 8-Bit Pixeldaten jedes Farbkanals in 1-Bit Druckdaten eines jeden Farbkanals eines zweiten Zielfarbraums mit zumindest einem Dithering-Algorithmus und Speichern der 1-Bit Druckdaten in einen Ausgabespeicher und (D) Bereitstellen der Druckdaten an den Drucker und Bedrucken zumindest eines Druckmediums mit dem Drucker.

Der ein solches Verfahren ermöglichende Rastergrafikprozessor mit einer Vielzahl von Prozessoren ist geeignet den oben genannten Nachteil der langsamen Rastergeschwindigkeit zu lösen. Allerdings benötigt dieser unverhältnismäßig viel Platz, da mehrere Serverracks in mehreren Serverschränken nötig sind, die aufgrund ihres hohen Gewichts nur mit einer Verladevorrichtung, typischerweise mit einem Gabelstapler, verrückt werden können. Ausserdem ist er störungsanfällig, das heißt unzuverlässig, sowie kostenintensiv und ist deshalb auch nicht besonders marktfähig. Für solche Hochleistungs-Rastergrafikprozessoren fallen aktuell typischerweise zwischen vierhunderttausend Euro und einer Million Euro, je nach Ausführung, bei der Anschaffung an.

Es gibt daher ein Bedürfnis nach einem Verfahren und auch nach einem Produkt zum Konvertieren von objektbasierten Daten in Pixeldaten, welches eine effektive Bearbeitung von objektbasierten Daten mit einem Rastergrafikprozessor einfacher und kostengünstiger Bauart ermöglicht.

Der vorliegenden Erfindung liegt daher die Aufgabe zugrunde, ein Verfahren und ein Produkt zum Konvertieren von objektbasierten Daten in Pixeldaten anzugeben, welches eine effektive Bearbeitung von objektbasierten Daten mit einem Rastergrafikprozessor einfacher und kostengünstiger Bauart ermöglicht, wodurch eine Verbesserung der Gesamtprozesseffektivität und auch der Gesamtanlageneffektivität hinsichtlich Verfügbarkeit, Leistung und Preis ermöglicht wird. Die Gesamtanlageneffektivität ist eine betriebswirtschaftliche Kennzahl, mit der die Produktivität und etwaige Verluste von technischen Anlagen gemessen werden kann.

Erfindungsgemäss wird die Aufgabe mit einem Verfahren, das die Merkmale des Anspruchs 1 umfasst, und mit einem Produkt, das die Merkmale des Anspruchs 22 umfasst, gelöst. Die jeweiligen Unteransprüche beziehen sich auf weitere vorteilhafte und gegebenenfalls zusätzlich erfinderische Ausführungsformen.

Der Erfindung liegt die Idee zugrunde einen Rastergrafikprozessor mit zumindest einem programmierbaren System-on-Chip umfassend mehrere Single-Instruction-Multiple-Data-fähige oder Multiple-Instruction-Multiple-Data-fähige Prozessoren mit jeweils zumindest einer vektorbasierten Arithmetik-Logikeinheit bereitzustellen, welche vektorbasierte Arithmetik-Logikeinheiten jeweils konfiguriert wurden, dergestalt, dass beim parallelen Bearbeiten von objektbasierten Daten mit den Prozessoren mehrere in die jeweilige Arithmetik-Logikeinheit parallel eingehenden objektbasierten Daten mit jeweils einer Bitbreite von X-Bit unter Anwendung eines vorgegebenen Rechenoperationssatzes in Pixeldaten mit einer Bitbreite von Y-Bit, die grösser als die Bitbreite von X-Bit ist, umgewandelt werden, wobei anschliessend die Y-Bit Pixeldaten in Form einer Pixelmatrix, die aus einer ganzzahligen Anzahl an N-Bit Pixeldaten besteht, in einen Pixelspeicher gepuffert oder gespeichert wird.

Es wird der Klarheit halber angemerkt, dass wenn bei der Erfindung oder einer seiner bevorzugten Ausführungsformen der Begriff "Prozessor", insbesondere der Begriff "Vektorprozessor", als solches verwendet wird, ein Single-Instruction-Multiple-Data-fähiger oder Multiple-Instruction-Multiple-Data-fähiger Prozessor, insbesondere Vektorprozessor, eines programmierbaren System-on-Chip des Rastergrafikprozessors gemeint ist.

Ein Verfahren, vorzugsweise ein computerimplementierten Verfahren, zur Synthese von S-Bit Druckdaten und zur Bereitstellung derselben an zumindest einen Drucker, umfasst bekanntlich die folgenden Schritte: (a) Eingeben von objektbasierten Daten zumindest eines Bildes in Form einer Seitenbeschreibungssprache in einen Rastergrafikprozessors mit zumindest einem System-on-Chip umfassend mehrere Prozessoren; (b) Konvertieren der objektbasierten Daten in N-Bit Pixeldaten eines jeden Farbkanals eines ersten Zielfarbraums mit vorgegebener Bildauflösung, indem die objektbasierten Daten an einige oder alle der mehreren Prozessoren bereitgestellt und mit den Prozessoren parallel bearbeitet werden; (c) Umwandeln der N-Bit Pixeldaten jedes Farbkanals in S-Bit Druckdaten eines jeden Farbkanals eines zweiten Zielfarbraums mit zumindest einem Dithering-Algorithmus und Puffern oder Speichern der S-Bit Druckdaten in einen Ausgabespeicher; (d) Bereitstellen der S-Bit Druckdaten an den Drucker und Bedrucken zumindest eines Druckmediums mit dem Drucker.

Dementsprechend handelt es sich bei dem erfindungsgemässen Verfahren um ein Verfahren, vorzugsweise um ein computerimplementiertes Verfahren, zur Synthese von S-Bit Druckdaten und zur Bereitstellung derselben an zumindest einen Drucker, umfassend:
a) Eingeben von objektbasierten Daten zumindest eines Bildes, vorzugsweise mehrerer Bilder, in Form einer Seitenbeschreibungssprache in einen Rastergrafikprozessors mit zumindest einem System-on-Chip umfassend mehrere Prozessoren;
b) Konvertieren der objektbasierten Daten in N-Bit Pixeldaten eines jeden Farbkanals eines ersten Zielfarbraums mit vorgegebener Bildauflösung, indem die objektbasierten Daten an einige oder an alle der mehreren Prozessoren bereitgestellt und mit den Prozessoren parallel bearbeitet werden;
c) Umwandeln der N-Bit Pixeldaten jedes Farbkanals in S-Bit Druckdaten eines jeden Farbkanals eines zweiten Zielfarbraums mit zumindest einem Dithering-Algorithmus und Puffern oder Speichern der S-Bit Druckdaten in einen Ausgabespeicher;
d) Bereitstellen der S-Bit Druckdaten an den zumindest einen Drucker und Bedrucken zumindest eines Druckmediums mit dem Drucker.

Erfindungsgemäss wird das System-on-Chip als programmierbares System-on-Chip und die Prozessoren als Single-Instruction-Multiple-Data-fähige oder Multiple-Instruction-Multiple-Data-fähige Prozessoren mit jeweils zumindest einer vektorbasierten Arithmetik-Logikeinheit bereitgestellt, welche vektorbasierte Arithmetik-Logikeinheiten jeweils konfiguriert wurden, dergestalt, dass beim parallelen Bearbeiten gemäss Schritt b) mehrere in die jeweilige Arithmetik-Logikeinheit parallel, d.h. gleichzeitig, eingehende objektbasierte Daten mit jeweils einer Bitbreite von X-Bit unter Anwendung eines vorgegebenen Rechenoperationssatzes in Pixeldaten mit einer Bitbreite von Y-Bit, die grösser als die Bitbreite von X-Bit ist, umgewandelt werden, wobei anschliessend die Y-Bit Pixeldaten in Form einer Pixelmatrix, die aus einer ganzzahligen Anzahl an N-Bit Pixeldaten besteht, in einen Pixelspeicher gepuffert oder gespeichert wird.

Dadurch ist der PSoC so ausgebildet, dass seine Prozessoren einen parallelen Zugriff auf den Pixelspeicher des PSoC haben, wodurch eine hohe Datenzugriffsrate ermöglicht wird. Das erfindungsgemässe Verfahren bietet neben den oben genannten Vorteilen darüber hinaus den Vorzug, dass das Verfahren zumindest während der Konvertierung mit einem niedrigen Energieverbrauch trotz hoher Datenbearbeitungsraten betrieben werden kann.

Dadurch kann ausserdem der Rastergrafikprozessor tragbar ausgeführt werden oder sein, und dies vorzugsweise selbst dann wenn er ausgebildet wird N-Bit Pixeldaten mit einer Rate von mindestens 800 Gigabit pro Sekunde, vorzugsweise von mindestens 2500 Gigabit pro Sekunde, gemäss Schritt b) zu erzeugen, indem der Rastergrafikprozessor mit einer ausreichend hohen Anzahl an programmierbaren System-on-Chips umfassend jeweils eine ausreichende Anzahl an Single-Instruction-Multiple-Data-fähigen oder Multiple-Instruction-Multiple-Data-fähigen Prozessoren, vorzugsweise Vektorprozessoren, bereitgestellt wird. Ermöglicht wird das dadurch, weil die PSoCs naturgemäss aussordentlich kompakt sind. Beispielsweise kann ein derartiger tragbarer Rastergrafikprozessor verwirklicht werden, indem mindestens 8 "Adaptive Computer Acceleration Platforms" des Typs "Premium Series" als PSoC der Firma Xilinx Inc. bereitgestellt werden. Der hier verwendete Begriff "tragbar" bedeutet, dass der Rastergrafikprozessor leicht mit einer oder beiden Händen eines Benutzers gehalten und transportiert werden kann. Diese Weiterbildungen bieten somit den Vorteil, dass eine erleichterte Handhabung und Bewegbarkeit des erfindungsgemässen Rastergrafikprozessors ermöglicht wird und ist.

Der oder die Single-Instruction-Multiple-Data-fähigen oder Multiple-Instruction-Multiple-Data-fähigen Prozessoren können jeweils mit mehreren vektorbasierten Arithmetik-Logikeinheiten bereitgestellt werden.

Die Single-Instruction-Multiple-Data-fähigen oder Multiple-Instruction-Multiple-Data-fähigen Prozessoren können als Single-Instruction-Multiple-Data-fähige oder Multiple-Instruction-Multiple-Data-fähige Vektorprozessoren bereitgestellt werden.

Die objektbasierten Daten sind objektbasierte PDF-Daten und/oder objektbasierte PostScript-Daten jeweils in Form einer vektorbasierten Seitenbeschreibungssprache.

Gemäss einer bevorzugten Ausführungsform wird als erster Zielfarbraum ein subtraktiver Farbraum vorgegeben, der vorzugsweise zumindest die Farbkanäle Cyanblau (C), Magentarot (M), Gelb (Y) und Schwarz (K) umfasst und als zweiter Zielraum ein subtraktiver Farbraum vorgegeben, der vorzugsweise zumindest die Farbkanäle Cyanblau (C), Magentarot(M), Gelb (Y) und Schwarz (K), und insbesondere zumindest eines der Farbkanäle eines vorbestimmten Grün und/oder Violett und/oder Orange umfasst.

Gemäss einer weiteren bevorzugten Ausführungsform weisen die N-Bit Pixeldaten eine Bitbreite von 8-/9-/10-/11-/12-/13-/14-/15- oder 16-Bit, vorzugsweise eine Bitbreite von 8-/16-/32- oder 64-Bit, insbesondere eine Bitbreite von 8-Bit auf, und die S-Bit Druckdaten eine Bitbreite von 1-/2-/3- oder 4-Bit auf.

Der Schrägstrich "/" bedeutet "oder". Wenn im Rahmen dieser Beschreibung von 8-Bit Pixeldaten eines Farbkanals eines ersten Zielfarbraums gesprochen, so werden damit Pixel mit einer Farbtiefe des einen Farbkanals von 8-Bit verstanden, d.h. mit einer Farbabstufung zwischen 0 und 255.

Wenn im Rahmen dieser Beschreibung von 1-Bit Druckdaten eines Farbkanals eines zweiten Zielfarbraums gesprochen wird, so werden damit Pixel mit einer Farbtiefe des einen Farbkanals von 1-Bit, d.h. mit einer Farbabstufung von 0 und 1, verstanden. Bei einem entsprechenden binären Druckmodus wird jeder Pixel einer Reihe eines auf dem Druckmedium gedachten Druckrasters entweder mit keinem Tropfen oder mit einem Tropfen einer Farbe beaufschlagt.

Wird hingegen beispielsweise von 2-Bit Druckdaten eines Farbkanals eines zweiten Zielfarbraums gesprochen, so werden damit Pixel mit einer Farbtiefe des einen Farbkanals von 2-Bit, d.h. mit einer Farbabstufung von 0 bis 3, verstanden. Bei einem entsprechenden grauskalen Modus wird jeder Pixel einer Reihe eines auf dem Druckmedium gedachten Druckrasters entweder mit keinem Tropfen oder mit einem Kombinationstropfen, der sich aus k Tropfen einer Farbe zusammensetzt, wobei k = 1-3 sein kann, beaufschlagt.

Gemäss einer weiteren bevorzugten Ausführungsform weisen die X-Bit Pixeldaten eine Bitbreite von 8-/16-/32- oder 64-Bit, vorzugsweise eine Bitbreite von 8-Bit, und die Y-Bit Druckdaten eine Bitbreite von 16-/32-/64-/128-/256-/512-/1024-/2048 oder 4096-Bit, vorzugsweise 128-/256-/512-/1024-/2048 oder 4096-Bit, auf.

Dementsprechend weisen bei dieser bevorzugten Ausführungsform die X-Bit Pixeldaten jeder vektorbasierten Arithmetik-Logikeinheit eine Bitbreite von 8-/16-/32- oder 64-Bit, vorzugsweise eine Bitbreite von 8-Bit, und die Y-Bit Druckdaten jeder vektorbasierten Arithmetik-Logikeinheit eine Bitbreite von 16-/32-/64-/128-/256-/512-/1024-/2048 oder 4096-Bit, vorzugsweise von 128-/256-/512-/1024-/2048 oder 4096-Bit auf, sodass die Summe der jeweiligen Y-Bit Druckdaten aller vektorbasierten Arithmetik-Logikeinheiten der Summe der jeweiligen Bitbreiten aller vektorbasierten Arithmetik-Logikeinheiten entspricht, welche Summe vorzugsweise eine Bitbreite von bis zu 1048576-Bit entspricht.

Gemäss einer besonders bevorzugten Ausführungsform des erfindungsgemässen Verfahrens wurde der Rastergrafikprozessor mit Konvertierungsmodi R1 und R2 ausgestattet, wobei das Konvertieren gemäss Schritt b) in einen oder in mehreren Konvertierungszyklen erfolgt, wobei ein Konvertierungszyklus die Schritte umfasst:
e) Bestimmen einer Objektgruppe von zu konvertierenden Objekten des Bildes basierend auf den Konvertierungsfortschritt;
f) Bestimmen des Rechenaufwands R für jedes Objekt aus der Objektgruppe, um vorherzusagen, ob der entsprechend erforderliche Rechenaufwand R einen vorgegebenen Wert S überschreitet oder den Wert S unterschreitet, und Kategorisieren der jeweiligen Objekte in Typ A, wenn der Rechenaufwand den Wert S unterschreitet, und in Typ B, wenn der Rechenaufwand den Wert S überschreitet;
g) Starten des Konvertierens, indem
   i. falls das Objekt als Typs A kategorisiert wurde, der Modus R1 gewählt wird und das Objekt nach Modus R1 in mehrere voneinander unabhängigen re-vektorisierte Objekte zerlegt und die re-vektorisierten Objekte an eine vorgebbare Anzahl an Prozessoren bereitgestellt und mit den Prozessoren gemäss Schritt b) konvertiert werden, welche re-vektorisierten Objekte Teilobjekte des Objekts sind, die in Summe das Objekt bilden;
   ii. falls das Objekt als Typs B kategorisiert wurde, der Modus R2 gewählt wird und das Objekt nach Modus R2 ohne in mehrere voneinander unabhängigen re-vektorisierte Objekte zerlegt zu werden gemäss Schritt b) konvertiert wird;

Diese Weiterbildungen bieten den Vorteil, dass sich durch diese gestufte Abfolge der mathematischen Entscheidungen über die Art der Konvertierung von unterschiedlichsten Objekten die Bearbeitungszeit der objektbasierten Daten eines einzelnen Bildes immens verringern lässt.

Ferner ist es möglich, dass falls das Objekt als Typs A kategorisiert wurde, die objektbasierten Pixeldaten in Schritt b) in einen internen Pixelspeicher des programmierbaren System-on-Chip gepuffert oder gespeichert werden und falls das Objekt als Typs B kategorisiert wurde, die objektbasierten Pixeldaten in einen in Bezug auf den programmierbaren System-on-Chip externer Pixelspeicher, vorzugsweise ein Cachespeicher, gepuffert oder gespeichert werden. Diese Weiterbildung hat den Vorteil, dass der externer Pixelspeicher in Bezug auf Lese- und Schreibvorgänge geschont wird. Infolgedessen kann ein Austausch des externen Speichers weniger oft erforderlich sein, wodurch Zeit und Kosten eingespart werden können. Ein interner Pixelspeicher des PSoC ist so ausgebildet, dass er in Bezug auf Lese- und Schreibvorgänge nicht altert, wo hingegen ein entsprechender externer Pixelspeicher in Bezug auf Lese- und Schreibvorgänge altern kann.

Gemäss einer weiteren bevorzugten Ausführungsform werden für ein jedes der grafischen Primitive aus der Gruppe der grafischen Primitive Rechteck, Kreis, Dreieck oder Linie zumindest ein, vorzugsweise mehrere Single-Instruction-Multiple-Data-fähige oder Multiple-Instruction-Multiple-Data-fähige Prozessoren bereitgestellt, die jeweils ausschliesslich ein auf das jeweilige grafische Primitiv abgestimmten vorgegebenen Rechenoperationssatz zur Ansteuerung seiner oder ihrer jeweils zumindest einen vektorbasierten Arithmetik-Logikeinheit umfassen, wobei jeder Rechenoperationssatz aus der Gruppe sich von jedem anderen Rechenoperationssatz aus der Gruppe unterscheidet, wobei gemäss Schritt b) die objektbasierten Daten in Abhängigkeit ihres grafischen Primitives nur an jenem oder nur an jene Prozessoren bereitgestellt werden, der oder die den auf den grafischen Primitiv abgestimmten vorgegebenen Rechenoperationssatz umfasst. Diese Weiterbildung bietet den Vorteil, dass sich hierdurch die Bearbeitungszeit der objektbasierten Daten eines Bildes, das zumindest ein oder mehrere Rechtecke und/oder Kreise und/oder Dreieck und oder Linien als grafische Primitive umfasst, ausserordentlich verringern lässt.

Dem Fachmann sind die entsprechenden Rechenoperationssätze aus dem Stand der Technik im Gebiet der Datenverarbeitung bekannt.

Gemäss einer besonders bevorzugten Ausführungsform werden die Single-Instruction-Multiple-Data-fähigen oder Multiple-Instruction-Multiple-Data-fähigen Prozessoren mit jeweils zumindest einer ersten und zweiten vektorbasierten Arithmetik-Logikeinheit bereitgestellt, die konfiguriert wurden, dergestalt, dass sie nach Bedarf hintereinander geschaltet werden und beim parallelen Bearbeiten gemäss Schritt b) zunächst mehrere in die erste Arithmetik-Logikeinheit parallel, d.h. gleichzeitig, eingehende objektbasierte Daten mit jeweils einer Bitbreite von X-Bit unter Anwendung eines vorgegebenen ersten Rechenoperationssatzes in mehrere Pixeldaten mit einer Bitbreite von Y-Bit, die grösser als die Bitbreite von X-Bit ist, umgewandelt werden, welche mehreren Y-Bit Pixeldaten dann in die zweite Arithmetik-Logikeinheit parallel, d.h. gleichzeitig, unter Anwendung eines vorgegebenen zweiten Rechenoperationssatzes in mehrere Pixeldaten mit einer Bitbreite von Z-Bit, die grösser als die Bitbreite von X-Bit ist, und auch vorzugsweise grösser als die Bitbreite von Y-Bit ist, umgewandelt werden, wobei anschliessend die Z-Bit Pixeldaten in Form einer Pixelmatrix, die aus einer ganzzahligen Anzahl an N-Bit Pixeldaten besteht, in einen Pixelspeicher gepuffert oder gespeichert wird. Diese Weiterbildung bietet den besonderen Vorteil, dass sich hierdurch die Bearbeitungszeit von objektbasierten Daten, die insbesondere aus mehreren grafischen Primitiven bestehen, insbesondere die die grafischen Primitive Rechteck und/oder Kreis und/oder Dreieck und/oder Linie umfassen, auf intelligente Art und Weise zusätzlich verkürzen lässt.

Die Zerlegung der Objekte in re-vektorisierte Objekte gemäss Schritt g[i]) und die Bereitstellung der re-vektorisierten Objekte an eine vorgebbare Anzahl an Prozessoren kann mit einem Single- oder Multi-Core Hauptprozessor des programmierbaren System-on-Chip erfolgen. Es wird der Klarheit halber angemerkt, dass der Hauptprozessor nicht der Prozessor, insbesondere nicht der Vektorprozessor des PSoC ist.

Gemäss einer bevorzugten Ausführungsform der Erfindung wird für jedes zu konvertierende Objekt aus der Objektgruppe der Rechenaufwand R gemäss Schritt f) basierend auf die Grösse und/oder die Ausrichtung des zu konvertierenden Objekts im Bild vorhergesagt, welcher Rechenaufwand vorzugsweise in einer Rechenaufwand-Vorhersagetabelle abgelegt wurde.

Ferner ist es möglich für den vorgegebenen Wert S entweder einen konstanten Wert oder nach Schritt e) und vor Schritt f) in jedem Konvertierungszyklus basierend auf eine frei ermittelte verfügbare Rechenleistung innerhalb der mehreren Prozessoren, und vorzugsweise basierend auf die Grösse und/oder die Ausrichtung eines fiktiven Objekts, einen variablen Wert vorzugeben, der vorzugsweise einer vorgegebenen Konvertierungsmodi-Tabelle entnommen wird. Diese Weiterbildung bietet den Vorteil, dass sich im zweiten Fall hierdurch die Bearbeitungszeit für ausgewählte Objekte, beispielsweise eines relativ kleinen aber relativ komplizierten Objekts, weiter verringern lässt.

Gemäss einer ersten bevorzugten Ausführungsform des Verfahrens werden vollautomatisiert Farbkarten und Farbprofile erstellt, indem in vorbestimmten Zeitabständen, Kalibrierfelder der jeweiligen Farbkanäle des zweiten Zielfarbraums, insbesondere auf Abfallflächen des Druckmediums oder zumindest einiger Druckmedien, gedruckt werden, die mit einem Bildmesssystem des Druckers eingelesen werden, wobei nach dem Einlesen, vorzugsweise mittels eines dafür vorgesehenen programmierbaren System-on-Chip, farbmetrische Berechnungen durchgeführt werden, um ein gegenüber dem im Verfahren vom Drucker verwendeten Farbprofil des ersten Zielfarbraumes neues Farbprofil des ersten Zielfarbraums zu erstellen, auf dessen Basis die Konvertierung nach Schritt b) erfolgt, derart, dass nach Erstellung des neuen Farbprofils das Bedrucken auf dessen Basis unmittelbar fortgeführt wird.

Diese Weiterbildung bietet den Vorteil, dass sich hierdurch ohne Bedienungsaufwand täglich mehrere Farbkarten erstellen lassen. Farbkarten sind Druckermuster. Sie können für jede Farbe, insbesondere für jedes Farbkanal, des zweiten Farbraums erstellt werden und sie dienen als visuelle Referenz. Typischerweise unterscheiden sich verschiedene Tintenchargen ein und derselben Tintenmarke in ihrer Färbung und auch in ihren Druckeigenschaften. Wenn also ein farbiges Bild auf ein Druckmedium mit unterschiedlichen Tintenchargen erzeugt wird, erhält man mehrere Bilder des gleichen Musters, die sich allerdings farblich voneinander unterscheiden. Ursächlich hierfür können zum einen nicht vermeidbare Unzulänglichkeiten beim Fertigungsverfahren einer Tinte und zum anderen sich im Laufe des Älterwerdens ändernde Eigenschaften der Tinte sein.

Gemäss einer alternativen zweiten bevorzugten Ausführungsform des Verfahrens werden in vorbestimmten Zeitabständen, bevorzugt mittels einer künstlichen Intelligenz, vorbestimmte Druckmuster eines auf ein Druckmedium aus S-Bit Druckdaten gedruckten Bildes mit einem Bildmesssystem des Druckers eingelesen, wobei nach dem Einlesen, vorzugsweise mittels eines dafür vorgesehenen programmierbaren System-on-Chip, farbmetrische Berechnungen durchgeführt werden, um ein gegenüber dem im Verfahren vom Drucker verwendeten Farbprofil des ersten Zielfarbraumes neues Farbprofil des ersten Zielfarbraums zu erstellen, auf dessen Basis die Konvertierung nach Schritt b) erfolgt, derart, dass nach Erstellung des neuen Farbprofils das Bedrucken auf dessen Basis unmittelbar fortgeführt wird.

Diese Weiterbildungen bieten den Vorteil, dass hierdurch ein Farbenabgleich und eine Neuerstellung von Farbprofilen im Vorübergehen bzw. on-the-fly erfolgen kann und ausserdem Drucktinte eingespart werden kann, da keine Kalibrierfelder mehr gedruckt werden müssen.

Gemäss einer ganz bevorzugten Ausführungsform des Verfahrens wird die erste bevorzugte Ausführungsform und die zweite bevorzugte Ausführungsform alternierend in vorbestimmten Zeitabständen durchgeführt.

Gemäss einer weiteren bevorzugten Ausführungsform des erfindungsgemässen Verfahrens wird das programmierbare System-on-Chip mit zumindest einer programmierbaren logischen Schaltung bereitgestellt, die zum Ausführen von gewichteten Additionsoperationen konfiguriert wurde, dergestalt, dass wenn mehrere Objekte der objektbasierten Daten sich im Bild überlagern, die N-Bit Farbwerte der sich überlagernden Pixel eines jeden Farbkanals der entsprechend in N-Bit Pixeldaten des einen jeden Farbkanals konvertierten mehreren Objekte in Schritt b) vor dem Puffern oder Speichern im Pixelspeicher mit der programmierten logischen Schaltung auf Hardwareebene gewichtet addiert werden. Diese Weiterbildungen bieten den Vorteil, dass sich hierdurch die Abspeicherungszeit der jeweiligen Farbwerte der überlagernden Pixel eines jeden Farbkanals von mehreren überlagerten Objekten ausserordentlich verringern lässt.

Ferner kann beim erfindungsgemässen Verfahren das programmierbare System-on-Chip mit einer weiteren programmierbaren logischen Schaltung bereitgestellt werden, die zum Ausführen der Verfahrensschritte gemäss Schritt c), insbesondere der computer-implementierten Verfahrensschritte gemäss Schritt c), konfiguriert wurde, dergestalt, dass auf der weiteren programmierbaren logischen Schaltung alle Schritte gemäss Schritt c) ablaufen.

Diese Weiterbildungen bieten den Vorteil, dass hierdurch eine zusätzliche Verbesserung der Gesamtprozesseffektivität und auch der Gesamtanlageneffektivität hinsichtlich Verfügbarkeit, Leistung und Preis ermöglicht wird.

Ausserdem ist es bei dieser bevorzugten Ausführungsform möglich, dass die weitere programmierbare logische Schaltung zum Ausführen eines Verfahrens, insbesondere eines computer-implementierten Verfahrens, zur Kompensation zumindest einer ausgefallenen oder fehlerhaften Düse konfiguriert wurde, dergestalt, dass wenn nach dem Bedrucken eines Druckmediums gemäss Schritt d) die ausgefallene oder fehlerhafte Düse, vorzugsweise mittels einer künstlichen Intelligenz, mit dem Bildmesssystem des Druckers erkannt wird, auf der programmierbaren logischen Schaltung alle Schritte des Verfahren, insbesondere des computer-implementierten Verfahrens, zur Kompensation der ausgefallenen oder fehlerhaften Düse ablaufen.

Diese Weiterbildungen bieten den Vorteil, dass hierdurch ein Pixel-Düsen-Abgleich im Vorübergehen bzw. on-the-fly ermöglicht wird, sodass in Folge die Kontinuität einer hohen Druckqualität gewährleistet werden kann.

Dem Fachmann sind Verfahren zur Kompensation einer ausgefallenen oder fehlerhaften Düse aus dem Stand der Technik bekannt. Das Grundprinzip, nach dem derartige Verfahren arbeiten, ist es die ausgefallene oder fehlerhafte Düse abzuschalten und Bilddaten, die durch die ausgefallene oder fehlerhafte Düse zu drucken waren, auf mehrere Düsen, die sich in der Nähe der ausgefallenen oder fehlerhaften Düse befinden, umzuverteilen.

Die objektbasierten Daten können in Form einer Hauptwarteschlange aus mehreren Bildern gemäss Schritt a) in den Rastergrafikprozessor eingegeben werden, wobei vor Schritt b) auf der Basis der Bilder aus der Hauptwarteschlange eine Anzeigeliste mit mehreren Bildern in mehreren auf das Druckmedium angedachten Reihen spezifiziert wird. Dadurch ist es möglich die Produktivität des Druckers zu erhöhen. Die Hauptwarteschlange kann aus mehreren Unterwarteschlangen mit jeweils zumindest einem oder mehreren Bildern mit einem in einer Cloud-Datenverarbeitungsumgebung vorgesehenen automatisierten Druckauftragssystem, und besonders bevorzugt mithilfe vorgegebener Algorithmen, erstellt werden.

Gemäss einer weiteren bevorzugten Ausführungsform werden gemäss Schritt a) ausschliesslich objektbasierte Daten in den Rastergrafikprozessor eingegeben, deren zugrundeliegendes Bild als Ganzes in sämtlichen Folgeschritten basierend auf die verfügbare Rechenleistung der Prozessoren zeitlich deterministisch verarbeitet werden kann, bevorzugt automatisiert, und besonders bevorzugt mittels einer künstlichen Intelligenz, derart, dass die erforderliche Zeit zum vollständigen Ausführen des Schrittes b) und sämtlicher Folgeschritte ausgenommen Schritt d) in Summe kürzer ist als die erforderliche Zeit zum vollständigen Bedrucken des Bildes auf zumindest das eine Druckmedium. Diese Weiterbildung bietet den Vorteil, dass die Gefahr eines Produktionsstopps deutlich reduziert oder gar gänzlich gebannt werden kann.

Gemäss einer weiteren bevorzugten Ausführungsform erfolgt vor Schritt a) nach Bedarf eine Bereinigung des Bildes oder der Bilder, um für das menschliche Auge optisch nicht-relevante objektbasierte Daten des Bildes zu entfernen, derart, dass die objektbasierten Daten in sämtlichen Folgeschritten zeitlich deterministisch verarbeitet werden können, wobei die Bereinigung vorzugsweise zumindest durch Filterung mit einem Transparenzfilter erfolgt. Diese Weiterbildung bietet den Vorteil, dass hierdurch in der Regel eine grössere Anzahl an Kundenbildern zeitlich deterministisch verarbeitet werden kann.

Ferner ist es möglich, dass die Bereinigung der objektbasierten Daten automatisiert mittels einer künstlichen Intelligenz erfolgt, vorzugsweise automatisiert mittels einer kontinuierlich weiter lernenden künstlichen Intelligenz, die besonders bevorzugt wenigstens einen adaptiven Entscheidungsalgorithmus umfasst, auf dessen Basis die Bereinigung erfolgt, und welcher Entscheidungsalgorithmus anhand von Verarbeitungsdaten von der künstlichen Intelligenz von Zeit zu Zeit angepasst wird. Diese Weiterbildung hat den Vorteil, dass eine noch Erhöhung der Gesamtanlageneffektivität hinsichtlich Verfügbarkeit, Leistung und Preis ermöglicht wird.

Der Drucker kann als Tintenstrahldrucker bereitgestellt werden. Weiter kann der Drucker als als Single-Pass-Drucker oder Multi-Pass-Drucker bereitgestellt werden. Vorzugsweise wird der Drucker als Single-Pass-Tintenstrahldrucker oder Multi-Pass-Tintenstrahldrucker bereitgestellt. Der Drucker kann alternativ beispielsweise als Laserdrucker oder Offsetdrucker bereitgestellt werden. Wird der Drucker als Tintenstrahldrucker bereitgestellt, so erfolgt das Bedrucken des zumindest einen Druckmediums mit Tintentropfen in der Farbe zumindest eines Farbkanals oder in den Farben aller Farbkanäle des zweiten Zielfarbraums auf Basis der S-Bit Druckdaten.

Der Schritt d) kann erfolgen, indem das Bedrucken auf ein sich in eine Transportrichtung bewegendes Druckmedium oder auf mehrere sich in eine Transportrichtung bewegende Druckmedien erfolgt.

Gemäss einer ganz bevorzugten Ausführungsform des erfindungsgemässen Verfahrens wurden die vektorbasierte Arithmetik-Logikeinheiten jeweils konfiguriert, dergestalt, dass beim parallelen Bearbeiten gemäss Schritt b) mehrere in die jeweilige Arithmetik-Logikeinheit parallel eingehende objektbasierte Daten mit jeweils einer Bitbreite von X-Bit unter Anwendung eines vorgegebenen Rechenoperationssatzes in einen einzigen Taktzyklus des Prozessors in Pixeldaten mit einer Bitbreite von Y-Bit, die grösser als die Bitbreite von X-Bit ist, umgewandelt werden, wobei anschliessend die Y-Bit Pixeldaten in Form einer Pixelmatrix, die aus einer ganzzahligen Anzahl an N-Bit Pixeldaten besteht, in einen Pixelspeicher gepuffert oder gespeichert wird.

Nach der Erfindung wird die Aufgabe auch durch ein Produkt, vorzugsweise ein Computerprogrammprodukt, gemäss Anspruch 22 gelöst.

Das erfindungsgemässe Produkt, vorzugsweise das Computerprogrammprodukt, zur Synthese von S-Bit Druckdaten und zur Bereitstellung derselben an zumindest einen Drucker, umfasst:
A. einen Rastergrafikprozessor mit zumindest einem System-on-Chip umfassend mehrere Prozessoren, der ausgebildet ist, dergestalt, dass in den Rastergrafikprozessor eingegebene objektbasierte Daten zumindest eines Bildes in Form einer Seitenbeschreibungssprache in N-Bit Pixeldaten eines jeden Farbkanals eines ersten Zielfarbraums mit vorgegebener Bildauflösung konvertiert werden, indem die objektbasierten Daten an einige oder an alle der mehreren Prozessoren bereitgestellt und mit den Prozessoren parallel bearbeitet werden;
B. eine Dithering-Recheneinheit, die ausgebildet ist, die N-Bit Pixeldaten jedes Farbkanals in S-Bit Druckdaten eines jeden Farbkanals eines zweiten Zielfarbraums mit zumindest einem Dithering-Algorithmus umzuwandeln und in einen Ausgabespeicher zu puffern oder zu speichern;
C. eine Ausgabeeinheit, die ausgebildet ist, die S-Bit Druckdaten an den Drucker bereitzustellen;
D. den zumindest einen Drucker zum Bedrucken zumindest eines Druckmediums;
E. wobei jedes System-on-Chip einen Single-Core oder einen Multi-Core-Hauptprozessor zur Delegation vorbestimmter Aufgaben, vorzugsweise der Konvertierung der objektbasierten Daten in N-Pixeldaten, an die Prozessoren umfasst.

Erfindungsgemäss sind das System-on-Chip als programmierbares System-on-Chip und die Prozessoren als Single-Instruction-Multiple-Data-fähige oder Multiple-Instruction-Multiple-Data-fähige Prozessoren mit jeweils zumindest einer vektorbasierten Arithmetik-Logikeinheit ausgebildet, welche vektorbasierte Arithmetik-Logikeinheiten jeweils konfiguriert sind, dergestalt, dass beim parallelen Bearbeiten der objektbasierten Daten mehrere in die jeweilige Arithmetik-Logikeinheit parallel, das heisst gleichzeitig, eingehende objektbasierte Daten mit jeweils einer Bitbreite von X-Bit unter Anwendung eines vorgegebenen Rechenoperationssatzes in Pixeldaten mit einer Bitbreite von Y-Bit, die grösser als die Bitbreite von X-Bit ist, umgewandelt werden, wobei anschliessend die Y-Bit Pixeldaten in Form einer Pixelmatrix, die aus einer ganzzahligen Anzahl an N-Bit Pixeldaten besteht, in einen Pixelspeicher gespeichert oder gepuffert wird.

Gemäss einer bevorzugten Ausführungsform sind die Single-Instruction-Multiple-Data-fähigen oder Multiple-Instruction-Multiple-Data-fähigen Prozessoren als Single-Instruction-Multiple-Data-fähige oder Multiple-Instruction-Multiple-Data-fähige Vektorprozessoren ausgebildet.

Als programmierbares System-on-Chip eignet sich beispielsweise ein seit Kurzem von der der Firma Xilinx Inc. als Handelsprodukt unter der Marke "Adaptive Computer Acceleration Platform" kommerziell vertriebenes programmierbares System-on-Chip, darunter beispielsweise die "Al Core Series", die "Al Edge Series", die "Prime Series" oder die "Premium Series". Solch programmierbares System-on-Chip umfassen einige hundert integrierte Vektorprozessoren.

Gemäss einer weiteren bevorzugten Ausführungsform umfasst das programmierbare System-on-Chip zumindest eine programmierbare logische Schaltung, die zum Ausführen von gewichteten Additionsoperationen konfiguriert ist, dergestalt, dass wenn mehrere Objekte der objektbasierten Daten sich im Bild überlagern, die N-Bit Farbwerte der sich überlagernden Pixel eines jeden Farbkanals der entsprechend in N-Bit Pixeldaten des einen jeden Farbkanals konvertierten mehreren Objekte in Schritt b) vor dem Puffern oder Speichern im Pixelspeicher mit der programmierten logischen Schaltung auf Hardwareebene gewichtet addiert werden. Diese Weiterbildungen bieten den Vorteil, dass sich hierdurch die Abspeicherungszeit der N-Bitdaten eines jeden Farbkanals von mehreren überlagerten Objekten ausserordentlich verringern lässt.

Das programmierbare System-on-Chip kann einen Single- oder Multi-Core Hauptprozessor umfassen, der konfiguriert ist, ein Objekt in re-vektorisierte Objekte gemäss Schritt g[i]) des erfindungsgemässen Verfahrens zu zerlegen. Das programmierbare System-on-Chip kann ausserdem eine Hochgeschwindigkeitsschnittstelle zum Empfangen und/oder Senden von Daten umfassen.

Das programmierbare System-on-Chip kann weiter einen Datenübertragungsbus umfassen, der in der Lage ist Daten mit einer Rate von bis zu mindestens 3 TBit/s, vorzugsweise bis zu 4 TBit/s, zu übertragen, wobei zumindest die mehreren Prozessoren, der Pixelspeicher, der Ausgabespeicher, die zumindest eine programmierbare logische Schaltung, der Single-Core oder der Multi-Core-Hauptprozessor und die Hochgeschwindigkeitsschnittstelle mit dem Datenübertragungsbus gekoppelt sind.

Ferner ist es möglich, dass der Rastergrafikprozessor einen Masterprozessor zur Ausführung bestimmter Aufgaben umfasst, vorzugsweise zur Delegation bestimmter Aufgaben an den zumindest einen, insbesondere an die mehreren programmierbaren SoCs.

Der Drucker kann als Tintenstrahldrucker ausgebildet sein. Weiter kann der Drucker als Single-Pass-Drucker oder Multi-Pass-Drucker ausgebildet sein. Vorzugsweise ist der Drucker als Single-Pass-Tintenstrahldrucker oder Multi-Pass-Tintenstrahldrucker ausgebildet. Der Drucker kann alternativ beispielsweise als Laserdrucker oder Offsetdrucker ausgebildet sein.

In einer bevorzugten Ausführungsform ist der Rastergrafikprozessor ausgebildet, dergestalt, dass er ein erfindungsgemässes Verfahren durchführen kann.

Gemäss einer ganz besonders bevorzugten Ausführungsform sind die vektorbasierten Arithmetik-Logikeinheiten jeweils konfiguriert, dergestalt, dass beim parallelen Bearbeiten der objektbasierten Daten mehrere in die jeweilige Arithmetik-Logikeinheit parallel eingehende objektbasierte Daten mit jeweils einer Bitbreite von X-Bit unter Anwendung eines vorgegebenen Rechenoperationssatzes in einen einzigen Taktzyklus des Prozessors in Pixeldaten mit einer Bitbreite von Y-Bit, die grösser als die Bitbreite von X-Bit ist, umgewandelt werden, wobei anschliessend die Y-Bit Pixeldaten in Form einer Pixelmatrix, die aus einer ganzzahligen Anzahl an N-Bit Pixeldaten besteht, in einen Pixelspeichers gespeichert wird.

Ferner kann in einer bevorzugten Ausführungsform die Dithering-Recheneinheit B als eine weitere programmierbare logische Schaltung konfiguriert sein.

Dementsprechend ist die weitere programmierbare logische Schaltung konfiguriert die N-Bit Pixeldaten jedes Farbkanals in S-Bit Druckdaten eines jeden Farbkanals eines zweiten Zielfarbraums mit zumindest einem Dithering-Algorithmus umzuwandeln und in einen Ausgabespeicher zu puffern oder zu speichern.

Diese Weiterbildung bietet den Vorteil, dass hierdurch eine zusätzliche Verbesserung der Gesamtprozesseffektivität und auch der Gesamtanlageneffektivität hinsichtlich Verfügbarkeit, Leistung und Preis ermöglicht ist.

Ausserdem ist es bei dieser bevorzugten Ausführungsform möglich, dass die weitere programmierbare logische Schaltung zum Ausführen eines Verfahrens, insbesondere eines computer-implementierten Verfahrens, zur Kompensation zumindest einer ausgefallenen oder fehlerhaften Düse konfiguriert ist, dergestalt, dass wenn nach dem Bedrucken eines Druckmediums gemäss Schritt d) die ausgefallene oder fehlerhafte Düse, vorzugsweise mittels einer künstlichen Intelligenz, mit dem Bildmesssystem des Druckers erkannt wird auf der programmierbaren logischen Schaltung alle Schritte des Verfahren, insbesondere des computer-implementierten Verfahrens, zur Kompensation der ausgefallenen oder fehlerhaften Düse ablaufen können.

Diese Weiterbildung bietet den Vorteil, dass hierdurch eine Düsenabgleich im Vorübergehen bzw. on-the-fly ermöglicht wird, sodass in Folge die Kontinuität einer hohen Druckqualität gewährleistet werden kann.

## Patentansprüche

1. Verfahren zur Synthese von S-Bit Druckdaten und zur Bereitstellung derselben an zumindest einen Drucker, umfassend:
a) Eingeben von objektbasierten Daten zumindest eines Bildes in Form einer Seitenbeschreibungssprache in einen Rastergrafikprozessors mit zumindest einem System-on-Chip umfassend mehrere Prozessoren;
b) Konvertieren der objektbasierten Daten in N-Bit Pixeldaten für jeden Farbkanal eines ersten Zielfarbraums mit vorgegebener Bildauflösung, indem die objektbasierten Daten an einige oder an alle der mehreren Prozessoren bereitgestellt und mit den Prozessoren parallel verarbeitet werden;
c) Umwandeln der N-Bit Pixeldaten jedes Farbkanals in S-Bit Druckdaten für Farbkanäle eines zweiten Zielfarbraums mit zumindest einem Dithering-Algorithmus, und Puffern oder Speichern der S-Bit Druckdaten in einen Ausgabespeicher;
d) Bereitstellen der S-Bit Druckdaten an den zumindest einen Drucker, und Bedrucken zumindest eines Druckmediums mit dem Drucker;
**dadurch gekennzeichnet, dass**
das System-on-Chip als programmierbares System-on-Chip und die Prozessoren als Single-Instruction-Multiple-Data-fähige oder Multiple-Instruction-Multiple-Data-fähige Prozessoren mit jeweils zumindest einer vektorbasierten Arithmetik-Logikeinheit bereitgestellt sind,
wobei die vektorbasierten Arithmetik-Logikeinheiten dergestalt konfiguriert werden, dass beim parallelen Verarbeiten gemäss Schritt b) mehrere in die jeweilige Arithmetik-Logikeinheit parallel eingehende objektbasierte Daten mit jeweils einer Bitbreite von X-Bit, unter Anwendung eines vorgegebenen Rechenoperationssatzes des Prozessors, in Pixeldaten mit einer Bitbreite von Y-Bit, die grösser als die Bitbreite von X-Bit ist, umgewandelt werden, wobei anschliessend die Y-Bit Pixeldaten in Form einer Pixelmatrix, die aus einer ganzzahligen Anzahl an N-Bit Pixeldaten besteht, in einen Pixelspeicher gepuffert oder gespeichert werden,
wobei die objektbasierten Daten objektbasierte PDF-Daten und/oder objektbasierte PostScript-Daten in Form einer vektorbasierten Seitenbeschreibungssprache umfassen, und wobei das programmierbare System-on-Chip so ausgebildet ist, dass es möglich ist, das System-on-Chip sowohl auf Hardwareebene als auch auf Softwareebene zu programmieren und umzuprogrammieren, d.h. zu designen und umzudesignen.

2. Verfahren nach Anspruch 1 **dadurch gekennzeichnet, dass** die Single-Instruction-Multiple-Data-fähigen oder Multiple-Instruction-Multiple-Data-fähigen Prozessoren als Single-Instruction-Multiple-Data-fähige oder Multiple-Instruction-Multiple-Data-fähige Vektorprozessoren bereitgestellt werden.

3. Verfahren nach zumindest einem der vorhergehenden Ansprüche **dadurch gekennzeichnet, dass** die N-Bit Pixeldaten eine Bitbreite von 8-/9-/10-/11-/12-/13-/14-/15- oder 16-Bit, vorzugsweise eine Bitbreite von 8-/16-/32- oder 64-Bit, insbesondere eine Bitbreite von 8-Bit, und die S-Bit Druckdaten eine Bitbreite von 1-/2-/3- oder 4-Bit aufweisen.

4. Verfahren nach zumindest einem der vorhergehenden Ansprüche **dadurch gekennzeichnet, dass** die X-Bit Pixeldaten eine Bitbreite von 8-/16-/32- oder 64-Bit, vorzugsweise eine Bitbreite von 8-Bit, und die Y-Bit Druckdaten eine Bitbreite von 16-/32-/64-/128-/256-/512-/1024-/2048 oder 4096-Bit, vorzugsweise 128-/256-/512-/1024-/2048 oder 4096-Bit, aufweisen.

5. Verfahren nach zumindest einem der vorhergehenden Ansprüche **dadurch gekennzeichnet, dass** der Rastergrafikprozessor mit den Konvertierungsmodi R1 und R2 ausgestattet wurde, wobei das Konvertieren gemäss Schritt b) in einen oder in mehreren Konvertierungszyklen erfolgt, wobei ein Konvertierungszyklus die Schritte umfasst:
e) Bestimmen einer Objektgruppe von zu konvertierenden Objekten des Bildes basierend auf den Konvertierungsfortschritt;
f) Bestimmen des Rechenaufwands R für jedes Objekt aus der Objektgruppe, um vorherzusagen, ob der entsprechend erforderliche Rechenaufwand R einen vorgegebenen Wert S überschreitet oder den Wert S unterschreitet, und Kategorisieren der jeweiligen Objekte in Typ A, wenn der Rechenaufwand den Wert S unterschreitet, und in Typ B, wenn der Rechenaufwand den Wert S überschreitet;
g) Starten des Konvertierens, indem
i. falls das Objekt als Typs A kategorisiert wurde, der Modus R1 gewählt wird und das Objekt nach Modus R1 in mehrere voneinander unabhängigen re-vektorisierte Objekte zerlegt und die re-vektorisierten Objekte an eine vorgebbare Anzahl an Prozessoren bereitgestellt und mit den Prozessoren gemäss Schritt b) konvertiert werden, welche re-vektorisierten Objekte Teilobjekte des Objekts sind, die in Summe das Objekt bilden;
i. falls das Objekt als Typs B kategorisiert wurde, der Modus R2 gewählt wird und das Objekt nach dem Modus R2 ohne in mehrere voneinander unabhängigen re-vektorisierte Objekte zerlegt zu werden gemäss Schritt b) konvertiert wird.

6. Verfahren nach Anspruch 5 **dadurch gekennzeichnet, dass** falls das Objekt als Typs A kategorisiert wurde, die objektbasierten Pixeldaten in Schritt b) in einen internen Pixelspeicher des programmierbaren System-on-Chip gepuffert oder gespeichert werden und falls das Objekt als Typs B kategorisiert wurde, die objektbasierten Pixeldaten in einen in Bezug auf den programmierbaren System-on-Chip externer Pixelspeicher, vorzugsweise ein Cachespeicher, gepuffert oder gespeichert werden.

7. Verfahren nach Anspruch 5 oder 6 **dadurch gekennzeichnet, dass** für den vorgegebenen Wert S entweder ein konstanter Wert oder nach Schritt e) und vor Schritt f) in jedem Konvertierungszyklus basierend auf eine frei ermittelte verfügbare Rechenleistung innerhalb der mehreren Prozessoren, und vorzugsweise basierend auf die Grösse und/oder die Ausrichtung eines fiktiven Objekts, ein variabler Wert vorgegeben wird, der vorzugsweise einer vorgegebenen Konvertierungsmodi-Tabelle entnommen wird.

8. Verfahren nach einem der Ansprüche 5 bis 7 **dadurch gekennzeichnet, dass** die Zerlegung der Objekte in re-vektorisierte Objekte gemäss Schritt (g[i]) und Bereitstellung der re-vektorisierten Objekte an eine vorgebbare Anzahl an Prozessoren mit einem Single- oder Multi-Core Hauptprozessor des programmierbaren System-on-Chip erfolgt.

9. Verfahren nach einem der Ansprüche 5 bis 8 **dadurch gekennzeichnet, dass** für jedes zu konvertierende Objekt aus der Objektgruppe der Rechenaufwand R gemäss Schritt f) basierend auf die Grösse und/oder die Ausrichtung des jeweils zu konvertierende Objekt im Bild vorhergesagt wird, welcher Rechenaufwand vorzugsweise in einer Rechenaufwand-Vorhersagetabelle abgelegt wurden.

10. Verfahren nach zumindest einem der vorhergehenden Ansprüche **dadurch gekennzeichnet, dass** für ein jedes der grafischen Primitive aus der Gruppe der grafischen Primitive Rechteck, Kreis, Dreieck oder Linie zumindest ein, vorzugsweise mehrere Single-Instruction-Multiple-Data-fähige oder Multiple-Instruction-Multiple-Data-fähige Prozessoren bereitgestellt werden, die jeweils ausschliesslich ein auf das jeweilige grafische Primitiv abgestimmten vorgegebenen Rechenoperationssatz zur Ansteuerung seiner oder ihrer jeweils zumindest einen vektorbasierten Arithmetik-Logikeinheit umfassen, wobei jeder Rechenoperationssatz aus der Gruppe sich von jedem anderen Rechenoperationssatz aus der Gruppe unterscheidet, wobei gemäss Schritt b) die objektbasierten Daten in Abhängigkeit ihres grafischen Primitives nur an jenem oder nur an jene Prozessoren bereitgestellt werden, der oder die den auf den grafischen Primitiv abgestimmten vorgegebenen Rechenoperationssatz umfasst.

11. Verfahren nach zumindest einem der vorhergehenden Ansprüche durch die Schritte gekennzeichnet, dass die Single-Instruction-Multiple-Data-fähigen oder Multiple-Instruction-Multiple-Data-fähigen Prozessoren mit jeweils zumindest einer ersten und zweiten vektorbasierten Arithmetik-Logikeinheit bereitgestellt werden, die konfiguriert wurden, dergestalt, dass sie nach Bedarf hintereinander geschaltet werden und beim parallelen Verarbeiten gemäss Schritt b) zunächst mehrere in die erste Arithmetik-Logikeinheit parallel eingehende objektbasierte Daten mit jeweils einer Bitbreite von X-Bit unter Anwendung eines vorgegebenen ersten Rechenoperationssatzes in mehrere Pixeldaten mit einer Bitbreite von Y-Bit, die grösser als die Bitbreite von X-Bit ist, umgewandelt werden, welche mehreren Y-Bit Pixeldaten dann in die zweite Arithmetik-Logikeinheit parallel unter Anwendung eines vorgegebenen zweiten Rechenoperationssatzes in mehrere Pixeldaten mit einer Bitbreite von Z-Bit, die grösser als die Bitbreite von X-Bit ist, und auch vorzugsweise grösser als die Bitbreite von Y-Bit ist, umgewandelt werden, wobei anschliessend die Z-Bit Pixeldaten in Form einer Pixelmatrix, die aus einer ganzzahligen Anzahl an N-Bit Pixeldaten besteht, in einen Pixelspeicher gepuffert oder gespeichert wird.

12. Verfahren nach zumindest einem der vorhergehenden Ansprüche ferner durch die Schritte gekennzeichnet, dass vollautomatisiert Farbkarten und Farbprofile erstellt werden, indem in vorbestimmten Zeitabständen, Kalibrierfelder der jeweiligen Farbkanäle des zweiten Zielfarbraums, insbesondere auf Abfallflächen des Druckmediums oder zumindest einiger Druckmedien, gedruckt werden, die mit einem Bildmesssystem des Druckers eingelesen werden, wobei nach dem Einlesen, vorzugsweise mittels eines dafür vorgesehenen programmierbaren System-on-Chip, farbmetrische Berechnungen durchgeführt werden, um ein gegenüber dem im Verfahren vom Drucker verwendeten Farbprofil des ersten Zielfarbraumes neues Farbprofil des ersten Zielfarbraums zu erstellen, auf dessen Basis die Konvertierung nach Schritt b) erfolgt, derart, dass nach Erstellung des neuen Farbprofils das Bedrucken auf dessen Basis unmittelbar fortgeführt wird.

13. Verfahren nach zumindest einem der vorhergehenden Ansprüche, **dadurch gekennzeichnet, dass** das programmierbare System-on-Chip mit zumindest einer programmierbaren logischen Schaltung bereitgestellt wird, die zum Ausführen von gewichteten Additionsoperationen konfiguriert wurde, dergestalt, dass wenn mehrere Objekte der objektbasierten Daten sich im Bild überlagern, die N-Bit Farbwerte der sich überlagernden Pixel eines jeden Farbkanals der entsprechend in N-Bit Pixeldaten des einen jeden Farbkanals konvertierten mehreren Objekte in Schritt b) vor dem Puffern oder Speichern im Pixelspeicher mit der programmierten logischen Schaltung auf Hardwareebene gewichtet addiert werden.

14. Verfahren nach Anspruch 5 oder nach zumindest einem der vorhergehenden Ansprüche 6 bis 13 bezogen auf Anspruch 5 **dadurch gekennzeichnet, dass** gemäss Schritt a) ausschliesslich objektbasierte Daten in den Rastergrafikprozessor eingegeben werden, deren zugrundeliegendes Bild als Ganzes in sämtlichen Folgeschritten basierend auf die verfügbare Rechenleistung der Prozessoren zeitlich deterministisch verarbeitet werden kann, bevorzugt automatisiert, und besonders bevorzugt mittels einer künstlichen Intelligenz, derart, dass die erforderliche Zeit zum vollständigen Ausführen des Schrittes b) und sämtlicher Folgeschritte ausgenommen Schritt d) in Summe kürzer ist als die erforderliche Zeit zum vollständigen Bedrucken des Bildes auf zumindest das eine Druckmedium.

15. Verfahren nach Anspruch 14 **dadurch gekennzeichnet, dass** vor Schritt a) nach Bedarf eine Bereinigung des Bildes oder der Bilder, um für das menschliche Auge optisch nicht-relevante objektbasierte Daten des Bildes zu entfernen, derart, dass die objektbasierten Daten in sämtlichen Folgeschritten zeitlich deterministisch verarbeitet werden können, wobei die Bereinigung vorzugsweise zumindest durch Filterung mit einem Transparenzfilter erfolgt.

16. Verfahren nach Anspruch 15 **dadurch gekennzeichnet, dass** die Bereinigung der objektbasierten Daten automatisiert mittels einer künstlichen Intelligenz erfolgt, vorzugsweise automatisiert mittels einer kontinuierlich weiter lernenden künstlichen Intelligenz, die besonders bevorzugt wenigstens einen adaptiven Entscheidungsalgorithmus umfasst, auf dessen Basis die Bereinigung erfolgt, und welcher Entscheidungsalgorithmus anhand von Verarbeitungsdaten von der künstlichen Intelligenz von Zeit zu Zeit angepasst wird.

17. Verfahren nach zumindest einem der vorhergehenden Ansprüche **dadurch gekennzeichnet, dass** der Drucker als Tintenstrahldrucker, vorzugsweise als Single-Pass-Tintenstrahldrucker oder Multi-Pass-Tintenstrahldrucker bereitgestellt wird.

18. Verfahren nach zumindest einem der vorhergehenden Ansprüche **dadurch gekennzeichnet, dass** die vektorbasierte Arithmetik-Logikeinheiten jeweils konfiguriert wurden, dergestalt, dass beim parallelen Verarbeiten gemäss Schritt b) mehrere in die jeweilige Arithmetik-Logikeinheit parallel eingehende objektbasierte Daten mit jeweils einer Bitbreite von X-Bit unter Anwendung eines vorgegebenen Rechenoperationssatzes in einen einzigen Taktzyklus des Prozessors in Pixeldaten mit einer Bitbreite von Y-Bit, die grösser als die Bitbreite von X-Bit ist, umgewandelt werden, wobei anschliessend die Y-Bit Pixeldaten in Form einer Pixelmatrix, die aus einer ganzzahligen Anzahl an N-Bit Pixeldaten besteht, in einen Pixelspeicher gepuffert oder gespeichert wird.

19. Verfahren nach zumindest einem der vorhergehenden Ansprüche ferner durch die Schritte gekennzeichnet, dass vollautomatisiert in vorbestimmten Zeitabständen, bevorzugt mittels einer künstlichen Intelligenz, vorbestimmte Druckmuster eines auf ein Druckmedium aus S-Bit Druckdaten gedruckten Bildes mit einem Bildmesssystem des Druckers eingelesen werden, wobei nach dem Einlesen, vorzugsweise mittels eines dafür vorgesehenen programmierbaren System-on-Chip, farbmetrische Berechnungen durchgeführt werden, um ein gegenüber dem im Verfahren vom Drucker verwendeten Farbprofil des ersten Zielfarbraumes neues Farbprofil des ersten Zielfarbraums zu erstellen, auf dessen Basis die Konvertierung nach Schritt b) erfolgt, derart, dass nach Erstellung des neuen Farbprofils das Bedrucken auf dessen Basis unmittelbar fortgeführt wird.

20. Verfahren nach zumindest einem der vorhergehenden Ansprüche **dadurch gekennzeichnet, dass** das programmierbare System-on-Chip mit einer weiteren programmierbaren logischen Schaltung bereitgestellt wird, die zum Ausführen der Verfahrensschritte gemäss Schritt c), insbesondere der computer-implementierten Verfahrensschritte gemäss Schritt c), konfiguriert wurde, dergestalt, dass auf der weiteren programmierbaren logischen Schaltung alle Schritte gemäss Schritt c) ablaufen.

21. Verfahren nach Anspruch 20 **dadurch gekennzeichnet, dass** die weitere programmierbare logische Schaltung zum Ausführen eines Verfahrens, insbesondere eines computer-implementierten Verfahrens, zur Kompensation zumindest einer ausgefallenen oder fehlerhaften Düse konfiguriert wurde, dergestalt, dass wenn nach dem Bedrucken eines Druckmediums gemäss Schritt d) die ausgefallene oder fehlerhafte Düse, vorzugsweise mittels einer künstlichen Intelligenz, mit dem Bildmesssystem des Druckers erkannt wird, auf der programmierbaren logischen Schaltung alle Schritte des Verfahren, insbesondere des computer-implementierten Verfahrens, zur Kompensation der ausgefallenen oder fehlerhaften Düse ablaufen.

22. Produkt zur Synthese von S-Bit Druckdaten und zur Bereitstellung derselben an zumindest einen Drucker, umfassend:
A. einen Rastergrafikprozessor mit zumindest einem System-on-Chip umfassend mehrere Prozessoren, der dergestalt ausgebildet ist, dass in den Rastergrafikprozessor eingegebene objektbasierte Daten zumindest eines Bildes in Form einer Seitenbeschreibungssprache, in N-Bit Pixeldaten für jeden Farbkanal eines ersten Zielfarbraums mit vorgegebener Bildauflösung konvertiert werden, indem die objektbasierten Daten an einige oder an alle der mehreren Prozessoren bereitgestellt und mit den Prozessoren parallel verarbeitet werden;
B. eine Dithering-Recheneinheit, die ausgebildet ist, die N-Bit Pixeldaten jedes Farbkanals in S-Bit Druckdaten der Farbkanäle eines zweiten Zielfarbraums mit zumindest einem Dithering-Algorithmus umzuwandeln und in einen Ausgabespeicher zu speichern;
C. eine Ausgabeeinheit, die ausgebildet ist, die S-Bit Druckdaten an den Drucker bereitzustellen;
D. den zumindest einen Drucker zum Bedrucken zumindest eines Druckmediums;
E. wobei jeder System-on-Chip einen Single-Core oder einen Multi-Core-Hauptprozessor zur Delegation vorbestimmter Aufgaben, vorzugsweise der Konvertierung der objektbasierten Daten in N-Pixeldaten, an die Prozessoren umfasst,
**dadurch gekennzeichnet, dass**
das System-on-Chip als programmierbares System-on-Chip und die Prozessoren als Single-Instruction-Multiple-Data-fähige oder Multiple-Instruction-Multiple-Data-fähige Prozessoren mit jeweils zumindest einer vektorbasierten Arithmetik-Logikeinheit ausgebildet sind, wobei die vektorbasierten Arithmetik-Logikeinheiter dergestalt konfiguriert sind, dass beim parallelen Verarbeiten der objektbasierten Daten mehrere in die jeweilige Arithmetik-Logikeinheit parallel eingehende objektbasierte Daten mit jeweils einer Bitbreite von X-Bit, unter Anwendung eines vorgegebenen Rechenoperationssatzes des Prozessors, in Pixeldaten mit einer Bitbreite von Y-Bit, die grösser als die Bitbreite von X-Bit ist, umgewandelt werden, wobei anschliessend die Y-Bit Pixeldaten in Form einer Pixelmatrix, die aus einer ganzzahligen Anzahl an N-Bit Pixeldaten besteht, in einen Pixelspeicher gespeichert werden, wobei die objektbasierten Daten objektbasierte PDF-Daten und/oder objektbasierte PostScript-Daten in Form einer vektorbasierter Seitenbeschreibungssprache umfassen, und wobei das programmierbare System-on-Chip so ausgebildet ist, dass es möglich ist, das System-on-Chip sowohl auf Hardwareebene als auch auf Softwareebene zu programmieren und umzuprogrammieren, d.h. zu designen und umzudesignen.

23. Produkt nach Anspruch 22, **dadurch gekennzeichnet, dass** die Single-Instruction-Multiple-Data-fähigen oder Multiple-Instruction-Multiple-Data-fähigen Prozessoren als Single-Instruction-Multiple-Data-fähige oder Multiple-Instruction-Multiple-Data-fähige Vektorprozessoren ausgebildet sind.

24. Produkt nach Anspruch 22 oder 23, **dadurch gekennzeichnet, dass** das programmierbare System-on-Chip zumindest eine programmierbare logische Schaltung umfasst, die zum Ausführen von gewichteten Additionsoperationen konfiguriert ist, dergestalt, dass wenn mehrere Objekte der objektbasierten Daten sich im Bild überlagern, die N-Bit Farbwerte der sich überlagernden Pixel eines jeden Farbkanals der entsprechend in N-Bit Pixeldaten des einen jeden Farbkanals konvertierten mehreren Objekte in Schritt b) vor dem Puffern oder Speichern im Pixelspeicher mit der programmierten logischen Schaltung auf Hardwareebene gewichtet addiert werden.

25. Produkt nach zumindest einem der Ansprüche 22 bis 24, **dadurch gekennzeichnet, dass** der Drucker als Tintenstrahldrucker, vorzugsweise als Single-Pass-Tintenstrahldrucker oder Multi-Pass-Tintenstrahldrucker ausgebildet ist.

26. Produkt nach zumindest einem der Ansprüche 22 bis 25, **dadurch gekennzeichnet, dass** der Rastergrafikprozessor ausgebildet ist, dergestalt, dass er ein Verfahren gemäss zumindest eines der Ansprüche 1 bis 21 durchführen kann.

27. Produkt nach zumindest einem der Ansprüche 22 bis 26, **dadurch gekennzeichnet, dass** die vektorbasierten Arithmetik-Logikeinheiten jeweils konfiguriert sind, dergestalt, dass beim parallelen Verarbeiten der objektbasierten Daten mehrere in die jeweilige Arithmetik-Logikeinheit parallel eingehende objektbasierte Daten mit jeweils einer Bitbreite von X-Bit unter Anwendung eines vorgegebenen Rechenoperationssatzes in einen einzigen Taktzyklus des Prozessors in Pixeldaten mit einer Bitbreite von Y-Bit, die grösser als die Bitbreite von X-Bit ist, umgewandelt werden, wobei anschliessend die Y-Bit Pixeldaten in Form einer Pixelmatrix, die aus einer ganzzahligen Anzahl an N-Bit Pixeldaten besteht, in einen Pixelspeichers gespeichert wird.

28. Produkt nach zumindest einem der Ansprüche 22 bis 27 **dadurch gekennzeichnet, dass** die Dithering-Recheneinheit B als eine weitere programmierbare logische Schaltung konfiguriert ist.

29. Produkt nach Anspruch 28 **dadurch gekennzeichnet, dass** die weitere programmierbare logische Schaltung zum Ausführen eines Verfahrens, insbesondere eines computer-implementierten Verfahrens, zur Kompensation zumindest einer ausgefallenen oder fehlerhaften Düse konfiguriert ist, dergestalt, dass wenn nach dem Bedrucken eines Druckmediums gemäss Schritt d) die ausgefallene oder fehlerhafte Düse, vorzugsweise mittels einer künstlichen Intelligenz, mit dem Bildmesssystem des Druckers erkannt wird, auf der programmierbaren logischen Schaltung alle Schritte des Verfahren, insbesondere des computer-implementierten Verfahrens, zur Kompensation der ausgefallenen oder fehlerhaften Düse ablaufen können.

## Claims

1. A method for synthesizing S-bit print data and providing it to at least one printer, comprising:
a) entering object-based data of at least one image in the form of a page description language into a raster graphics processor with at least one system-on-chip comprising multiple processors;
b) converting the object-based data into N-bit pixel data for each color channel of a first target color space with a predetermined image resolution by providing the object-based data to some or all of the plurality of processors and processing it in parallel with the processors;
c) converting the N-bit pixel data of each color channel into S-bit print data for color channels of a second target color space using at least one dithering algorithm, and buffering or storing the S-bit print data in an output memory;
d) providing the S-bit print data to the at least one printer, and printing at least one print medium with the printer;
**characterized in that** the system-on-chip is provided as a programmable system-on-chip and the processors are provided as single-instruction multiple-data-capable or multiple-instruction multiple-data-capable processors, each with at least one vector-based arithmetic logic unit, wherein the vector-based arithmetic logic units are being configured such that, during parallel processing according to step b), multiple object-based data items each having a bit width of X bits and entering the respective arithmetic logic unit in parallel are converted into pixel data with a bit width of Y bits, which is greater than the bit width of X bits, using a predetermined set of arithmetic operations of the processor, whereupon the Y-bit pixel data is buffered or stored in a pixel memory in the form of a pixel matrix consisting of an integer number of N-bit pixel data, wherein the object-based data comprises object-based PDF data and/or object-based PostScript data in the form of a vector-based page description language, and wherein the programmable system-on-chip is designed in such a way that it is possible to program and reprogram the system-on-chip both at the hardware level and at the software level, i.e., to design and redesign it.

2. Method according to claim 1, **characterized in that** the single-instruction multiple-data-capable or multiple-instruction multiple-data-capable processors are provided as single-instruction multiple-data-capable or multiple-instruction multiple-data-capable vector processors.

3. Method according to at least one of the preceding claims, **characterized in that** the N-bit pixel data has a bit width of 8-/9-/10-/11-/12-/13-/14-/15- or 16-bits, preferably a bit width of 8-/16-/32- or 64-bits, in particular a bit width of 8-bits, and the S-bit print data has a bit width of 1-/2-/3- or 4-bit.

4. Method according to at least one of the preceding claims, **characterized in that** the X-bit pixel data has a bit width of 8-/16-/32- or 64-bits, preferably a bit width of 8-bits, and the Y-bit print data has a bit width of 16-/32-/64-/128-/256-/512-/1024-/2048 or 4096-bits, preferably 128-/256-/512-/1024-/2048- or 4096-bits.

5. Method according to at least one of the preceding claims, **characterized in that** the raster graphics processor has been equipped with conversion modes R1 and R2, wherein the conversion according to step b) is performed in one or more conversion cycles, wherein a conversion cycle comprises the steps:
e) determining an object group of objects of the image to be converted based on the conversion progress;
f) determining the computational effort R for each object from the object group in order to predict whether the corresponding required computational effort R exceeds a predetermined value S or falls below the value S, and categorizing the respective objects into type A if the computational effort falls below the value S, and into type B if the computational effort exceeds the value S;
g) Starting the conversion by
i. if the object has been categorized as type A, mode R1 is selected and the object is divided into several independent re-vectorized objects according to mode R1, and the re-vectorized objects are provided to a predeterminable number of processors and converted with the processors according to step b), which re-vectorized objects are sub-objects of the object that together form the object;
i. if the object has been categorized as type B, mode R2 is selected and the object is converted according to mode R2 without being divided into several independent re-vectorized objects according to step b).

6. Method according to claim 5, **characterized in that** if the object has been categorized as type A, the object-based pixel data in step b) are buffered or stored in an internal pixel memory of the programmable system-on-chip, and if the object has been categorized as type B, the object-based pixel data are buffered or stored in a pixel memory external to the programmable system-on-chip, preferably a cache memory.

7. Method according to claim 5 or 6, **characterized in that** for the predetermined value S, either a constant value or, after step e) and before step f) in each conversion cycle, based on a freely determined available computing power within the plurality of processors, and preferably based on the size and/or orientation of a fictitious object, a variable value is specified, which is preferably taken from a specified conversion mode table.

8. Method according to one of claims 5 to 7, **characterized in that** the decomposition of the objects into re-vectorized objects according to step (g[i]) and the provision of the re-vectorized objects to a predeterminable number of processors is performed with a single- or multi-core main processor of the programmable system-on-chip.

9. Method according to one of claims 5 to 8, **characterized in that** for each object to be converted from the object group, the computational effort R is predicted according to step f) based on the size and/or orientation of the respective object to be converted in the image, which computational effort is preferably stored in a computational effort prediction table.

10. Method according to at least one of the preceding claims, **characterized in that** for each of the graphic primitives from the group of graphic primitives rectangle, circle, triangle, or line, at least one, preferably several single-instruction multiple-data-capable or multiple-instruction multiple-data-capable processors are provided, each of which exclusively comprises a predetermined set of arithmetic operations tailored to the respective graphic primitive for controlling its or their respective at least one vector-based arithmetic logic unit, wherein each set of arithmetic operations from the group differs from every other set of arithmetic operations from the group, wherein, according to step b), the object-based data are provided to only those processors that comprise the predetermined set of arithmetic operations tailored to the graphic primitive.

11. Method according to at least one of the preceding claims, **characterized by** the steps in that the single-instruction multiple-data-capable or multiple-instruction multiple-data-capable processors are provided with at least one first and second vector-based arithmetic logic unit, respectively, which have been configured in such a way that they are connected in series as required and, during parallel processing according to step b), first several object-based data items with a bit width of X-bits each, which are fed into the first arithmetic logic unit in parallel, are converted into several pixel data items with a bit width of Y-bits, which is greater than the bit width of X-bits, using a predetermined first set of arithmetic operations, which multiple Y-bit pixel data are then converted in the second arithmetic logic unit in parallel using a predetermined second set of arithmetic operations into multiple pixel data with a bit width of Z-bits, which is greater than the bit width of X-bits, and also preferably greater than the bit width of Y-bits, whereupon the Z-bit pixel data is buffered or stored in a pixel memory in the form of a pixel matrix consisting of an integer number of N-bit pixel data.

12. Method according to at least one of the preceding claims, further **characterized by** the steps of in a fully automated manner creating color charts and color profiles by printing calibration fields of the respective color channels of the second target color space at predetermined intervals, in particular on waste areas of the print medium or at least some print media, which are read in by an image measuring system of the printer, wherein, after reading, preferably by means of a programmable system-on-chip provided for this purpose, colorimetric calculations are performed in order to create a new color profile of the first target color space relative to the color profile of the first target color space used in the printer's process, on the basis of which the conversion according to step b) is performed, such that after creation of the new color profile, printing is continued immediately on the basis thereof.

13. Method according to at least one of the preceding claims, **characterized in that** the programmable system-on-chip is provided with at least one programmable logic circuit configured to perform weighted addition operations, such that when multiple objects of the object-based data overlap in the image, the N-bit color values of the overlapping pixels of each color channel of the correspondingly converted into N-bit pixel data of each color channel in step b) are weighted and added with the programmed logic circuit at the hardware level before being buffered or stored in the pixel memory.

14. Method according to claim 5 or at least one of the preceding claims 6 to 13 in relation to claim 5, **characterized in that**, according to step a), only object-based data are entered into the raster graphics processor, the underlying image of which can be processed as a whole in all subsequent steps based on the available computing power of the processors in a temporally deterministic manner, preferably automatically, and particularly preferably by means of artificial intelligence, such that the time required to completely execute step b) and all subsequent steps except step d) is shorter in total than the time required to completely print the image on at least the one print medium.

15. Method according to claim 14, **characterized in that**, before step a), if necessary, the image or images are cleaned up to remove object-based data of the image that is optically irrelevant to the human eye, such that the object-based data can be processed in a time-deterministic manner in all subsequent steps, wherein the cleaning up is preferably performed at least by filtering with a transparency filter.

16. Method according to claim 15, **characterized in that** the cleaning of the object-based data is performed automatically by means of artificial intelligence, preferably automatically by means of continuously learning artificial intelligence, which particularly preferably comprises at least one adaptive decision algorithm on the basis of which the cleaning is performed, and which decision algorithm is adjusted from time to time by the artificial intelligence on the basis of processing data.

17. Method according to at least one of the preceding claims, **characterized in that** the printer is provided as an inkjet printer, preferably as a single-pass inkjet printer or multi-pass inkjet printer.

18. Method according to at least one of the preceding claims, **characterized in that** the vector-based arithmetic logic units have each been configured in such a way that, during parallel processing according to step b), multiple object-based data items, each with a bit width of X-bits, entering the respective arithmetic logic unit in parallel are converted in a single clock cycle of the processor into pixel data with a bit width of Y-bits, which is greater than the bit width of X-bits, using a predetermined set of arithmetic operations whereupon the Y-bit pixel data is buffered or stored in a pixel memory in the form of a pixel matrix consisting of an integer number of N-bit pixel data.

19. Method according to at least one of the preceding claims, further **characterized by** the steps that, fully automatically at predetermined intervals, preferably by means of artificial intelligence, predetermined print patterns of an image printed on a print medium from S-bit print data are read in with an image measuring system of the printer, whereby after reading in, preferably by means of a programmable system-on-chip provided for this purpose, colorimetric calculations are performed in order to create a new color profile of the first target color space relative to the color profile of the first target color space used by the printer in the method, on the basis of which the conversion according to step b) is performed, such that after the new color profile has been created, printing is continued immediately on the basis of this profile.

20. Method according to at least one of the preceding claims, **characterized in that** the programmable system-on-chip is provided with a further programmable logic circuit which has been configured to execute the method steps according to step c), in particular the computer-implemented method steps according to step c), in such a way that all steps according to step c) are performed on the further programmable logic circuit.

21. Method according to claim 20, **characterized in that** the further programmable logic circuit has been configured to execute a method, in particular a computer-implemented method, for compensating for at least one failed or faulty nozzle, such that when, after printing a print medium according to step d), the failed or faulty nozzle, preferably by means of artificial intelligence, is detected by the printer's image measurement system, all steps of the method, in particular the computer-implemented method, for compensating for the failed or faulty nozzle are performed on the programmable logic circuit.

22. Product for synthesizing S-bit print data and for providing the same to at least one printer, comprising:
A. a raster graphics processor with at least one system-on-chip comprising multiple processors, which is designed in such a way that object-based data of at least one image entered into the raster graphics processor in the form of a page description language is converted into N-bit pixel data for each color channel of a first target color space with a predetermined image resolution, by providing the object-based data to some or all of the plurality of processors and processing it in parallel with the processors;
B. a dithering calculation unit configured to convert the N-bit pixel data of each color channel into S-bit print data of the color channels of a second target color space using at least one dithering algorithm and to store it in an output memory;
C. an output unit configured to provide the S-bit print data to the printer;
D. the at least one printer for printing on at least one print medium;
E. wherein each system-on-chip comprises a single-core or multi-core main processor for delegating predetermined tasks, preferably the conversion of the object-based data into N-pixel data, to the processors,
**characterized in that**
the system-on-chip is designed as a programmable system-on-chip and the processors are designed as single-instruction multiple-data-capable or multiple-instruction multiple-data-capable processors, each with at least one vector-based arithmetic logic unit, wherein the vector-based arithmetic logic units are configured in such a way that, during parallel processing of the object-based data, several object-based data items with a bit width of X-bits each, which are fed into the respective arithmetic logic unit in parallel, are converted into pixel data with a bit width of Y-bits, which is greater than the bit width of X-bits , wherein the Y-bits pixel data are subsequently stored in a pixel memory in the form of a pixel matrix consisting of an integer number of N-bit pixel data, wherein the object-based data comprises object-based PDF data and/or object-based PostScript data in the form of a vector-based page description language, and wherein the programmable system -on-chip is designed in such a way that it is possible to program and reprogram the system-on-chip at both the hardware and software levels, i.e., to design and redesign it.

23. Product according to claim 22, **characterized in that** the single-instruction multiple-data-capable or multiple-instruction multiple-data-capable processors are designed as single-instruction multiple-data-capable or multiple-instruction multiple-data-capable vector processors.

24. Product according to claim 22 or 23, **characterized in that** the programmable system-on-chip comprises at least one programmable logic circuit configured to perform weighted addition operations such that when multiple objects of the object-based data overlap in the image, the N-bit color values of the overlapping pixels of each color channel of the multiple objects converted accordingly into N-bit pixel data of each color channel in step b) are weighted and added with the programmed logic circuit at the hardware level before buffering or storing in the pixel memory.

25. Product according to at least one of claims 22 to 24, **characterized in that** the printer is designed as an inkjet printer, preferably as a single-pass inkjet printer or multi-pass inkjet printer.

26. Product according to at least one of claims 22 to 25, **characterized in that** the raster graphics processor is designed in such a way that it can perform a method according to at least one of claims 1 to 21.

27. Product according to at least one of claims 22 to 26, **characterized in that** the vector-based arithmetic logic units are each configured in such a way that, during parallel processing of the object-based data, several object-based data items with a bit width of X-bits each, arriving in parallel at the respective arithmetic logic unit, are converted into pixel data in a single clock cycle of the processor using a predetermined set of arithmetic operations are converted in a single clock cycle of the processor into pixel data with a bit width of Y-bits, which is greater than the bit width of X-bits whereupon the Y-bit pixel data is subsequently stored in a pixel memory in the form of a pixel matrix consisting of an integer number of N-bit pixel data.

28. Product according to at least one of claims 22 to 27, **characterized in that** the dithering arithmetic unit B is configured as a further programmable logic circuit.

29. Product according to claim 28, **characterized in that** the further programmable logic circuit is configured to execute a method, in particular a computer-implemented method, for compensating for at least one failed or defective nozzle, such that when, after printing a print medium according to step d), the failed or defective nozzle preferably by means of artificial intelligence, is detected by the printer's image measurement system, all steps of the method, in particular the computer-implemented method, for compensating for the failed or faulty nozzle can be executed on the programmable logic circuit.

## Revendications

1. Procédé de synthèse de données d'impression S-Bit et de fourniture de celles-ci à au moins une imprimante, comprenant:
a) la saisie de données basées sur des objets d'au moins une image sous la forme d'un langage de description de page dans un processeur graphique matriciel avec au moins un système sur puce comprenant plusieurs processeurs;
b) la conversion des données basées sur des objets en données de pixels à N-bits pour chaque canal de couleur d'un premier espace colorimétrique cible avec une résolution d'image prédéfinie, en fournissant les données basées sur des objets à certains ou à tous les processeurs et en les traitant en parallèle avec les processeurs;
c) conversion des données de pixels N-bits de chaque canal de couleur en données d'impression S bits pour les canaux de couleur d'un deuxième espace colorimétrique cible avec au moins un algorithme de tramage, et mise en mémoire tampon ou stockage des données d'impression S-bits dans une mémoire de sortie;
d) fourniture des données d'impression S-bits à au moins une imprimante, et impression d'au moins un support d'impression avec l'imprimante ; **caractérisé en ce que** le système sur puce est fourni sous forme de système sur puce programmable et les processeurs sont fournis sous forme de processeurs compatibles Single-Instruction-Multiple-Data ou Multiple-Instruction-Multiple-Data, chacun avec au moins une unité arithmétique et logique vectorielle, les unités arithmétiques et logiques vectorielles étant configurées de telle sorte que, lors du traitement parallèle selon l'étape b), plusieurs données orientées objet entrant en parallèle dans l'unité arithmétique et logique respective, chacune ayant une largeur de bit de X-bits, sont converties en utilisant un ensemble d'opérations arithmétiques prédéfini du processeur en données de pixels ayant une largeur de bit de Y-bits, qui est supérieure à la largeur de bit de X-bits, les données de pixels de Y-bits étant ensuite mises en mémoire tampon ou stockées dans une mémoire de pixels sous la forme d'une matrice de pixels composée d'un nombre entier de données de pixels de N-bits, les données basées sur des objets comprenant des données PDF et/ou des données PostScript basées sur des objets sous la forme d'un langage de description de page basé sur des vecteurs, et le système sur puce programmable étant conçu de telle sorte qu'il est possible de programmer et de reprogrammer, c'est-à-dire de concevoir et de reconcevoir, le système sur puce tant au niveau matériel qu'au niveau logiciel.

2. Procédé selon la revendication 1, **caractérisé en ce que** les processeurs compatibles Single Instruction Multiple Data ou Multiple Instruction Multiple Data sont fournis sous forme de processeurs vectoriels compatibles Single Instruction Multiple Data ou Multiple Instruction Multiple Data.

3. Procédé selon au moins l'une des revendications précédentes, **caractérisé en ce que** les données de pixels N-bits ont une largeur de bit de 8-/9-/10-/11-/12-/13-/14-/15- ou 16-bits, de préférence une largeur de bit de 8-/16-/32- ou 64-bits, en particulier une largeur de bit de 8-bits, et les données d'impression à S-bits ont une largeur de bits de 1-/2-/3- ou 4-bits.

4. Procédé selon au moins l'une des revendications précédentes, **caractérisé en ce que** les données de pixels X-bits ont une largeur de bit de 8-/16-/32- ou 64-bits, de préférence une largeur de bit de 8-bits, et les données d'impression Y bits ont une largeur de bit de 16-/32-/64-/128-/256-/512-/1024-/2048- ou 4096-bits, de préférence 128-/256-/512-/1024-/2048- ou 4096-bits.

5. Procédé selon au moins l'une des revendications précédentes, **caractérisé en ce que** le processeur graphique matriciel a été équipé des modes de conversion R1 et R2, la conversion selon l'étape b) s'effectuant en un ou plusieurs cycles de conversion, un cycle de conversion comprenant les étapes suivantes :
e) détermination d'un groupe d'objets de l'image à convertir en fonction de la progression de la conversion ;
f) déterminer la charge de calcul R pour chaque objet du groupe d'objets afin de prédire si la charge de calcul R requise correspondante dépasse une valeur prédéfinie S ou est inférieure à la valeur S, et classer les objets respectifs dans le type A si la charge de calcul est inférieure à la valeur S, et dans le type B si la charge de calcul dépasse la valeur S ;
g) démarrer la conversion en
i. si l'objet a été classé dans le type A, le mode R1 est sélectionné et l'objet est divisé selon le mode R1 en plusieurs objets re-vectorisés indépendants les uns des autres, et les objets re-vectorisés sont fournis à un nombre prédéterminé de processeurs et convertis avec les processeurs conformément à l'étape b), les objets re-vectorisés étant des sous-objets de l'objet qui, ensemble, forment l'objet;
i. si l'objet a été classé comme étant de type B, le mode R2 est sélectionné et l'objet est converti selon le mode R2 sans être divisé en plusieurs objets re-vectorisés indépendants les uns des autres conformément à l'étape b).

6. Procédé selon la revendication 5, **caractérisé en ce que** si l'objet a été classé comme étant de type A, les données de pixels basées sur l'objet à l'étape b) dans une mémoire de pixels interne du système sur puce programmable et, si l'objet a été classé comme étant de type B, les données de pixels basées sur l'objet sont mises en mémoire tampon ou stockées dans une mémoire de pixels externe par rapport au système sur puce programmable, de préférence une mémoire cache.

7. Procédé selon la revendication 5 ou 6, **caractérisé en ce que** pour la valeur prédéfinie S, soit une valeur constante, soit, après l'étape e) et avant l'étape f), dans chaque cycle de conversion, sur la base d'une puissance de calcul disponible librement déterminée au sein des multiples processeurs, et de préférence sur la base de la taille et/ou de l'orientation d'un objet fictif, une valeur variable est prédéfinie, qui est de préférence extraite d'un tableau de modes de conversion prédéfini.

8. Procédé selon l'une des revendications 5 à 7, **caractérisé en ce que** la décomposition des objets en objets re-vectorisés selon l'étape (g[i]) et la mise à disposition des objets re-vectorisés à un nombre prédéterminé de processeurs avec un processeur principal à cœur unique ou multicœur du système sur puce programmable s'effectuent.

9. Procédé selon l'une des revendications 5 à 8, **caractérisé en ce que**, pour chaque objet à convertir du groupe d'objets, la charge de calcul R est prédite conformément à l'étape f) sur la base de la taille et/ou de l'orientation de l'objet à convertir dans l'image, laquelle charge de calcul a été de préférence enregistrée dans un tableau de prédiction de charge de calcul.

10. Procédé selon au moins l'une des revendications précédentes, **caractérisé en ce que** pour chacune des primitives graphiques du groupe des primitives graphiques rectangle, cercle, triangle ou ligne, au moins un, de préférence plusieurs processeurs compatibles Single-Instruction-Multiple-Data ou Multiple-Instruction-Multiple-Data sont fournis, qui comprennent chacun exclusivement un ensemble d'opérations de calcul prédéfini adapté à la primitive graphique correspondante pour commander son ou ses unités arithmétiques et logiques au moins vectorielles, chaque ensemble d'opérations de calcul du groupe se distinguant de tout autre ensemble d'opérations de calcul du groupe, les données basées sur les objets étant fournies, conformément à l'étape b), en fonction de leur primitive graphique uniquement à celui ou ceux des processeurs qui comprennent le jeu d'opérations arithmétiques prédéfini adapté à la primitive graphique.

11. Procédé selon au moins l'une des revendications précédentes, **caractérisé par** les étapes suivantes: les processeurs compatibles Single-Instruction-Multiple-Data ou Multiple-Instruction-Multiple-Data sont fournis avec au moins une première et une deuxième unité arithmétique et logique à base de vecteurs, qui ont été configurées de manière à être connectées en série selon les besoins et, lors du traitement parallèle conformément à l'étape b), à convertir d'abord plusieurs données basées sur des objets entrant en parallèle dans la première unité arithmétique et logique, chacune ayant une largeur de bit de X-bits, en utilisant un premier jeu d'opérations arithmétiques prédéfini, en plusieurs données de pixels ayant une largeur de bit de Y-bits, qui est supérieure à la largeur de bit de X-bits lesquelles plusieurs données de pixels de Y-bits sont ensuite converties dans la deuxième unité arithmétique et logique en parallèle à l'aide d'un deuxième ensemble d'opérations arithmétiques prédéfini en plusieurs données de pixels d'une largeur de bit de Z-bits, qui est supérieure à la largeur de bit de X-bits, et également de préférence supérieure à la largeur de bits de Y-bits, les données de pixels Z-bits étant ensuite mises en mémoire tampon ou stockées dans une mémoire de pixels sous la forme d'une matrice de pixels composée d'un nombre entier de données de pixels N-bits.

12. Procédé selon au moins l'une des revendications précédentes, **caractérisé en outre par** les étapes suivantes: des nuanciers et des profils de couleurs sont créés de manière entièrement automatisée en imprimant, à des intervalles de temps prédéterminés, des champs d'étalonnage des canaux de couleur respectifs du deuxième espace colorimétrique cible, en particulier sur des zones de rejet du support d'impression ou au moins de certains supports d'impression, qui sont lus à l'aide d'un système de mesure d'image de l'imprimante, après la lecture, de préférence à l'aide d'un système sur puce programmable prévu à cet effet, des calculs colorimétriques sont effectués afin de créer un nouveau profil de couleurs du premier espace colorimétrique cible par rapport au profil de couleurs du premier espace colorimétrique cible utilisé dans le procédé de l'imprimante, sur la base duquel la conversion selon l'étape b) est effectuée, de telle sorte qu'après la création du nouveau profil de couleurs, l'impression se poursuit immédiatement sur la base de celui-ci.

13. Procédé selon au moins l'une des revendications précédentes, **caractérisé en ce que** le système sur puce programmable est fourni avec au moins un circuit logique programmable qui a été configuré pour exécuter des opérations d'addition pondérées, de telle sorte que lorsque plusieurs objets des données basées sur les objets se superposent dans l'image, les valeurs de couleur N-bits des pixels superposés de chaque canal de couleur des correspondant en données de pixels à N-bits de chacun des canaux de couleur desdits plusieurs objets sont additionnées de manière pondérée au niveau matériel à l'aide du circuit logique programmé avant d'être mises en mémoire tampon ou stockées dans la mémoire de pixels à l'étape b).

14. Procédé selon la revendication 5 ou selon au moins l'une des revendications 6 à 13 précédentes par rapport à la revendication 5, **caractérisé en ce que**, conformément à l'étape a), seules les données basées sur des objets sont entrées dans le processeur graphique matriciel, dont l'image sous-jacente dans son ensemble peut être traitée de manière déterministe dans le temps dans toutes les étapes suivantes en fonction de la puissance de calcul disponible des processeurs, de préférence de manière automatisée, et de préférence au moyen d'une intelligence artificielle, de telle sorte que le temps nécessaire à l'exécution complète de l'étape b) et de toutes les étapes suivantes, à l'exception de l'étape d), soit au total plus court que le temps nécessaire à l'impression complète de l'image sur au moins un support d'impression.

15. Procédé selon la revendication 14, **caractérisé en ce qu'**avant l'étape a), si nécessaire, un nettoyage de l'image ou des images est effectué afin de supprimer les données de l'image basées sur des objets qui ne sont pas pertinentes pour l'œil humain, de telle sorte que les données basées sur des objets puissent être traitées de manière déterministe dans toutes les étapes suivantes, le nettoyage étant de préférence effectué au moins par filtrage avec un filtre de transparence.

16. Procédé selon la revendication 15, **caractérisé en ce que** le nettoyage des données basées sur les objets est effectué de manière automatisée à l'aide d'une intelligence artificielle, de préférence de manière automatisée à l'aide d'une intelligence artificielle qui continue d'apprendre en permanence, qui comprend de manière particulièrement préférée au moins un algorithme de décision adaptatif sur la base duquel le nettoyage est effectué, et lequel algorithme de décision est adapté de temps à autre par l'intelligence artificielle à l'aide de données de traitement.

17. Procédé selon au moins l'une des revendications précédentes, **caractérisé en ce que** l'imprimante est fournie sous la forme d'une imprimante à jet d'encre, de préférence sous la forme d'une imprimante à jet d'encre à passage unique ou d'une imprimante à jet d'encre à passages multiples.

18. Procédé selon au moins l'une des revendications précédentes, **caractérisé en ce que** les unités arithmétiques et logiques à base de vecteurs ont été configurées de telle sorte que, lors du traitement parallèle selon l'étape b), plusieurs données basées sur des objets entrant en parallèle dans l'unité arithmétique et logique respective, chacune ayant une largeur de bit de X-bits, sont converties en données de pixels ayant une largeur de bit de Y bits, qui est supérieure à la largeur de bit de X-bits, en utilisant un ensemble d'opérations arithmétiques prédéterminé dans un seul cycle d'horloge du processeur , les données de pixels de Y-bits étant ensuite mises en mémoire tampon ou stockées dans une mémoire de pixels sous la forme d'une matrice de pixels composée d'un nombre entier de données de pixels de N-bits.

19. Procédé selon au moins l'une des revendications précédentes, **caractérisé en outre par** les étapes suivantes: à intervalles de temps prédéterminés, de manière entièrement automatisée, de préférence à l'aide d'une intelligence artificielle, des modèles d'impression prédéterminés d'une image imprimée sur un support d'impression à partir de données d'impression de S-bits sont lus à l'aide d'un système de mesure d'image de l'imprimante, après la lecture, de préférence au moyen d'un système sur puce programmable prévu à cet effet, des calculs colorimétriques sont effectués afin de créer un nouveau profil de couleurs du premier espace colorimétrique cible par rapport au profil de couleurs utilisé dans le procédé de l'imprimante, sur la base duquel la conversion selon l'étape b) est effectuée, de telle sorte qu'après la création du nouveau profil de couleurs, l'impression se poursuit immédiatement sur la base de celui-ci.

20. Procédé selon au moins l'une des revendications précédentes, **caractérisé en ce que** le système sur puce programmable est fourni avec un autre circuit logique programmable qui a été configuré pour exécuter les étapes du procédé selon l'étape c), en particulier les étapes du procédé mises en oeuvre par ordinateur selon l'étape c), de telle sorte que toutes les étapes selon l'étape c) s'exécutent sur l'autre circuit logique programmable.

21. Procédé selon la revendication 20, **caractérisé en ce que** le circuit logique programmable supplémentaire a été configuré pour exécuter un procédé, en particulier un procédé mis en œuvre par ordinateur, pour compenser au moins une buse défectueuse ou défaillante, de telle sorte que lorsque, après l'impression d'un support d'impression conformément à l'étape d), la buse défectueuse ou défaillante, de préférence au moyen d'une intelligence artificielle, est détectée par le système de mesure d'image de l'imprimante, toutes les étapes du procédé, en particulier du procédé mis en oeuvre par ordinateur, pour compenser la buse défaillante ou défectueuse s'exécutent sur le circuit logique programmable.

22. Produit pour la synthèse de données d'impression S-Bit et pour la mise à disposition de celles-ci à au moins une imprimante, comprenant:
A. un processeur graphique matriciel avec au moins un système sur puce comprenant plusieurs processeurs, qui est conçu de telle sorte que les données basées sur des objets d'au moins une image entrées dans le processeur graphique matriciel sous la forme d'un langage de description de page sont converties en données de pixels N-bits pour chaque canal de couleur d'un premier espace colorimétrique cible avec une résolution d'image prédéfinie, en fournissant les données basées sur des objets à certains ou à tous les processeurs multiples et en les traitant en parallèle avec les processeurs;
B. une unité de calcul de tramage conçue pour convertir les données de pixels à N-bits de chaque canal de couleur en données d'impression à S-bits des canaux de couleur d'un deuxième espace colorimétrique cible à l'aide d'au moins un algorithme de tramage et pour les stocker dans une mémoire de sortie;
C. une unité de sortie conçue pour fournir les données d'impression à S-bits à l'imprimante ;
D. au moins une imprimante pour imprimer au moins un support d'impression;
E. chaque système sur puce comprenant un processeur principal monocœur ou multicœur pour déléguer des tâches prédéterminées, de préférence la conversion des données basées sur des objets en données de N-pixels, aux processeurs,
**caractérisé en ce que**
le système sur puce est conçu comme un système sur puce programmable et les processeurs comme des processeurs compatibles single-instruction-multiple-data ou multiple-instruction-multiple-data, chacun comprenant au moins une unité arithmétique et logique vectorielle, les unités arithmétiques et logiques vectorielles sont configurées de telle sorte que, lors du traitement parallèle des données basées sur des objets, plusieurs données basées sur des objets entrant en parallèle dans l'unité arithmétique et logique respective, chacune ayant une largeur de bit de X-bits, sont converties, en utilisant un ensemble d'opérations arithmétiques prédéfini du processeur, en données de pixels ayant une largeur de bit de Y-bits, qui est supérieure à la largeur de bit de X-bits, les données de pixels de Y bits étant ensuite stockées dans une mémoire de pixels sous la forme d'une matrice de pixels composée d'un nombre entier de données de pixels de N-bits, les données basées sur des objets comprenant des données PDF basées sur des objets et/ou des données PostScript basées sur des objets sous la forme d'un langage de description de page basé sur des vecteurs, et le système programmable sur puce est conçu de telle sorte qu'il est possible de programmer et de reprogrammer le système sur puce tant au niveau matériel qu'au niveau logiciel, c'est-à-dire de le concevoir et de le reconcevoir.

23. Produit selon la revendication 22, **caractérisé en ce que** les processeurs compatibles Single-Instruction-Multiple-Data ou Multiple-Instruction-Multiple-Data sont conçus comme des processeurs vectoriels compatibles Single-Instruction-Multiple-Data ou Multiple-Instruction-Multiple-Data.

24. Produit selon la revendication 22 ou 23, **caractérisé en ce que** le système sur puce programmable comprend au moins un circuit logique programmable qui est configuré pour exécuter des opérations d'addition pondérées, de telle sorte que lorsque plusieurs objets des données basées sur des objets se superposent dans l'image, les valeurs de couleur N-bits des pixels superposés de chaque canal de couleur des multiples objets convertis en conséquence en données de pixels N-bits de chaque canal de couleur à l'étape b) sont additionnées de manière pondérée au niveau matériel à l'aide du circuit logique programmé avant d'être mises en mémoire tampon ou stockées dans la mémoire de pixels.

25. Produit selon au moins l'une des revendications 22 à 24, **caractérisé en ce que** l'imprimante est conçue comme une imprimante à jet d'encre, de préférence comme une imprimante à jet d'encre à passage unique ou une imprimante à jet d'encre à passages multiples.

26. Produit selon au moins l'une des revendications 22 à 25, **caractérisé en ce que** le processeur graphique matriciel est conçu de manière à pouvoir exécuter un procédé selon au moins l'une des revendications 1 à 21.

27. Produit selon au moins l'une des revendications 22 à 26, **caractérisé en ce que** les unités arithmétiques et logiques basées sur des vecteurs sont chacune configurées de telle sorte que, lors du traitement parallèle des données basées sur des objets, plusieurs données basées sur des objets entrant parallèlement dans l'unité arithmétique , sont converties en données de pixel d'une largeur de bit de Y-bits, qui est supérieure à la largeur de bit de X-bits, en utilisant un ensemble d'opérations arithmétiques prédéfini, dans un seul cycle d'horloge du processeur , les données de pixels de Y-bits étant ensuite stockées dans une mémoire de pixels sous la forme d'une matrice de pixels composée d'un nombre entier de données de pixels de N-bits.

28. Produit selon au moins l'une des revendications 22 à 27, **caractérisé en ce que** l' unité de calcul de tramage B est configurée comme un autre circuit logique programmable.

29. Produit selon la revendication 28, **caractérisé en ce que** le circuit logique programmable supplémentaire est configuré pour exécuter un procédé, en particulier un procédé mis en oeuvre par ordinateur, pour compenser au moins une buse défaillante ou défectueuse, de telle sorte que lorsque, après l'impression d'un support d'impression conformément à l'étape d), la buse défaillante ou défectueuse, de préférence au moyen d'une intelligence artificielle, est détectée par le système de mesure d'image de l'imprimante, toutes les étapes du procédé, en particulier du procédé mis en oeuvre par ordinateur, pour compenser la buse défaillante ou défectueuse peuvent être exécutées sur le circuit logique programmable.
